# EUROPEAN PATENT APPLICATION

(11) **EP 1 865 414 A1**
(43) Date of publication of application: **12.12.2007**
(21) Application number: 06712017.0
(22) Date of filing: 19.01.2006
(51) Int. Cl.: G06F 13/00

(54) **DATA TRANSFER DEVICE, DATA TRANSFER METHOD, AND DATA TRANSFER PROGRAM**

(30) Priority: 21.01.2005 JP 2005013976
(71) Applicant: MATSUSHITA ELECTRIC INDUSTRIAL CO., LTD., Osaka 571-8501 (JP)
(72) Inventor: INAGAKI, Yuichi, c/o Matsushita Electr.Ind.Co.,Ltd., 2-1-61 Shiromi, Chuo-ku, Osaka 540-6207 (JP)
(74) Representative: Dempster, Benjamin John Naftel
(86) International application number: PCT/JP2006/300771
(87) International publication number: WO 2006/077943

(57) **Abstract**

A data transfer system is provided that, even in cases when the demands of the user are not concretely determined, can select the appropriate transferee for processing those demands. The data transfer system (103) comprises: a category information database (105) configured to link and store category items for classifying hierarchically targets described with data, and related transfer destinations; a transfer destination determination unit (602) configured to determine the transfer destination of the received data, upon a data receiving unit (601) receiving the data; an inquiry data receiving unit (608) configured to receive an unprocessed notification from the transfer destination; a category item retrieval unit (609) configured to retrieve the category item from the category information database on the basis of the transfer destination in response to the unprocessed notification; a transfer destination retrieval unit (610) configured to retrieve from the category information database a new transfer destination of the received data on the basis of the retrieved category items; and a data transfer unit (603) configured to transfer the received data to the transfer destination.

## Description

### TECHNICAL FIELD

The present invention relates to a data transfer system that transfers data related to contents, information and the like.

### BACKGROUND ART

Services that provide music, images, video and other contents are provided on various sites on the Internet. Because the amount of contents provided is so large, if the desired contents are determined in advance, the user can search for the contents using the attributes of the contents, such as the title or author. If the desired contents cannot be found on one site, other sites could be searched. Even when the desired contents are determined in advance, there are cases when finding the contents is difficult. When the user has preferences but no contents have been concretely determined, it is even more difficult to find the contents the user desires. It is impossible to accurately determine whether or not contents the user desires is on a site and which sites should be searched. In such cases, a system that searches for contents provided on multiple sites all at once can be used.

In addition, when the contents or information requested by the user cannot be obtained from one provider, the request can be transferred to other providers. For example, customer inquiry systems that automatically allocate to responsible parties inquires sent by customers and send to customers responses from the responsible parties are disclosed in Patent Citations 1 and 2. When the customer inquiry system receives inquiry information, inquiry notification mail is sent to the responsible party in accordance with the product name or type in that inquiry. With the system noted in Patent Citation 2, if there is a delay in responding, a message seeking a response is sent not just to the responsible party but also to the manager over the responsible party. With such systems, there are times when the responsible party who first received the inquiry notification is not suited to respond to that inquiry. When it is determined from the contents of the inquiry that another responsibly party is better suited to respond, the responsible party who received the notification can request that the system transfer the inquiry to another party. When the customer inquiry system receives an inquiry transfer request, it sends a transfer message to the other party. Through this, the party responding to the inquiry can be switched.
[Patent Citation 1] Japanese Patent Laid-Open Application No. 2000-215121
[Patent Citation 2] Japanese Patent Laid-Open Application No. 2001-265921

### DISCLOSURE OF THE INVENTION

With a system that searches contents provided on multiple sites all at once, the system must confirm the contents on the various sites in a timely fashion. Because the contents and information provided by those sites constantly change, the volume of information that a bundled search system processes is enormous.

When a system that is a go-between between users and providers transfers data from a user from one provider to another provider, it is best for processing such as management and searches of contents and information to be accomplished by the systems of each provider. However, when processing has not been undertaken by one provider, it is difficult to select a transfer destination to which the data from the user is transferred. If the system selects an unsuitable transfer destination, there is a high probability that the transfer will be repeated. If the transfer is repeated, it is impossible to accomplish the processing quickly. Moreover, as the number of transfers increases in this manner, the burden on providers that did not need to accomplish processing increases unnecessarily.

In consideration of the foregoing, it is an objective of the present invention to provide, when the requests of the users are not concretely determined, a data transfer system, data transfer method and data transfer program that can select the appropriate transfer destination for processing the request.

In order to achieve the above-described objective, the data transfer system of the present invention comprises: a category information database configured to link and store category items for classifying hierarchically targets described with data, and transfer destinations; a receiving unit configured to receive data; a transfer destination determination unit configured to, upon the receiving unit receiving the data, determine the transfer destination of the received data; an unprocessed notification receiving unit configured to receive an unprocessed notification from the transfer destination of the received data; a category item retrieval unit configured to retrieve the category item from the category information database on the basis of the transfer destination of the received data in case of the unprocessed notification unit receiving the unprocessed notification; a transfer destination retrieval unit configured to retrieve a new transfer destination of the received data from the category information database on the basis of the category item retrieved by the category item retrieval unit; and a transfer unit configured to transfer the received data by the receiving unit to the new transfer destination retrieved by the transfer destination retrieval unit.

In accordance with another aspect of the present invention, there is provided a data transfer method. The data transfer method comprises the steps of: receiving data; determining a transfer destination of the received data, in response to the data; receiving an unprocessed notification from the transfer destination of the received data; retrieving a category item on the basis of the transfer destination of the received data from a category information database, in response to the unprocessed notification, the category information database linking and storing the category items for classifying hierarchically targets described by the data, and transfer destinations; retrieving a new transfer destination of the received data from the category information database on the basis of the retrieved category item; and transferring the received data to the retrieved transfer destination.

In accordance with another aspect, the present invention can provide a data transfer program for causing a computer to execute the steps of the above-described data transfer method, and a computer readable recording medium storing the data transfer program.

By employing the configurations as described above, with the present invention it is possible to select the appropriate transfer destination for processing a user's requests, even when those requests are not concretely determined, and it is possible to execute processing of those results quickly.

### BRIEF DESCRIPTION OF THE DRAWINGS

Fig. 1 is a drawing illustrating the schematic configuration of a music distribution system according to the first embodiment.
Fig. 2 is a drawing showing an example of the data that is sent when music contents are requested of the server from a terminal.
Fig. 3 is a drawing illustrating one example of the hierarchical relationship of genres contained in the category information database.
Fig. 4 is a drawing illustrating one example of the data structure in the category information database.
Fig. 5 is a drawing showing one example of response data sent to the data transfer system from the server.
Fig. 6 is a function block diagram illustrating the schematic configuration of the data transfer system according to the first embodiment.
Fig. 7 is a drawing illustrating one example of the data structure in the transfer information database.
Fig. 8 is a flowchart illustrating one example of the process procedures of the data transfer system.
Fig. 9 is a drawing illustrating an example in which the number of times a request is transferred to the transfer destination prior to receiving a process complete notification is totaled by transfer destinations.
Fig. 10 is a drawing showing one example of the data structure in the category information database for accomplishing linking among genres.
Fig. 11 is a function block diagram showing another example related to the schematic configuration of the data transfer system according to the first embodiment.
Fig. 12 is a diagram showing the overall configuration of the inquiry response system of the second embodiment.
Fig. 13 is a drawing showing the hardware configuration of a Web server apparatus.
Fig. 14 is a drawing showing the hardware configuration of a database server apparatus.
Fig. 15 is a drawing showing the hardware configuration of a mail server apparatus.
Fig. 16 is a drawing showing the hardware configuration of a client terminal.
Fig. 17 is a drawing showing the hardware configuration of a responsible party terminal.
Fig. 18 is a function block diagram for an inquiry response system.
Fig. 19 is a diagram illustrating the hierarchical structure of product categories.
Fig. 20 is a drawing showing an example of the configuration of a category master file and a responsible party determination master file.
Fig. 21 is a drawing showing an example of the configuration of the responsible party master file and the customer information master file.
Fig. 22 is a drawing showing an example of the configuration of the inquiry data file and the response data file.
Fig. 23 is a drawing showing one example of an inquiry screen.
Fig. 24 is a flowchart illustrating one example of the procedures for determining the responsible party.
Fig. 25 is a diagram showing one example of mail for notifying the responsible party of an inquiry.
Fig. 26 is a diagram showing examples of the inquiry confirmation screen and response content registration screen.
Fig. 27 is a diagram showing an example of the transferee selection screen.
Fig. 28 is a flowchart illustrating one example of the automated retrieval procedures.
Fig. 29 is a drawing showing one example of mail for providing notification of a transfer.
Fig. 30 is a flowchart illustrating one example of the procedures for retrieval in response to input terms.
Fig. 31 is a drawing showing one example of the transferee selection screen when small categories are placed in recommended order
Fig. 32 is a drawing illustrating the relationship between the urgency level and the hierarchical structure of category items.
Fig. 33 is a flowchart illustrating one example of the procedure for determining an urgency level.
Fig. 34 is a flowchart illustrating one example of the retrieval procedure when urgency level and success rate are used.
Fig. 35 is a drawing showing one example of the transferee selection screen when medium categories are placed in recommended order.

### BEST MODE FOR CARRYING OUT THE INVENTION

Below, the preferred embodiments of the present invention are explained with reference to the attached drawings. In the first embodiment, the present invention is embodied as a music distribution system for providing music contents to users.

### (First Embodiment)

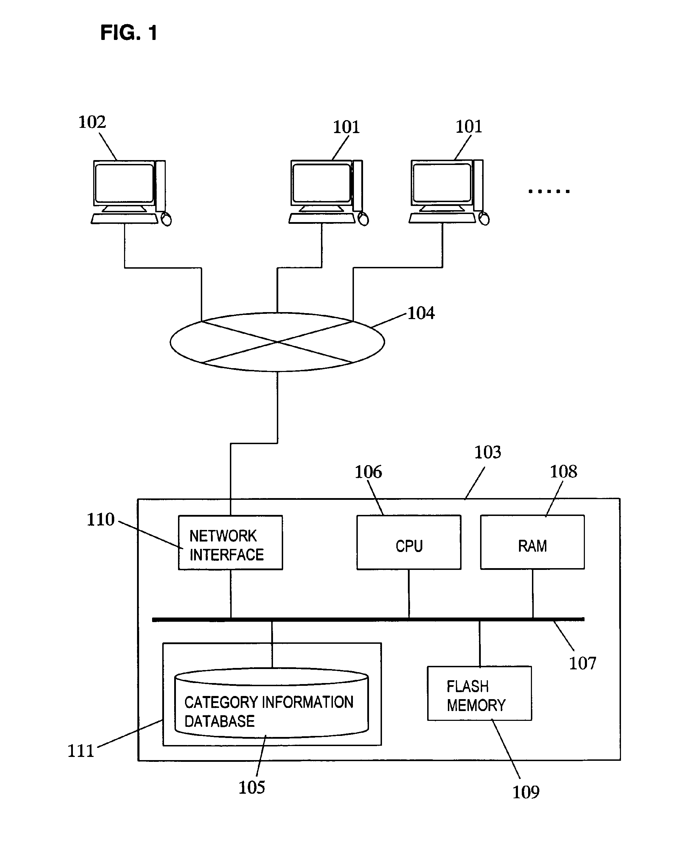

Fig. 1 is a drawing illustrating the overall configuration of the music distribution system. In this music distribution system, multiple servers 101, a user terminal 102 and a data transfer system 103 are connected via a network 104. Each server 101 stores a plurality of music contents and provides music contents in response to requests from the terminal 102. The terminal 102 can be a personal computer or an audio player having a communication function. The user, when requesting the music contents to be provided, specifies, for example, the desired music genre or a preferred melody. The melody can be input into the terminal 102 by humming into a microphone connected to the terminal 102 or by inputting symbols representing a melody. The data transfer system 103 is a go-between for data communication between the servers 101 and the terminal 102. The data transfer system 101 receives a request from the terminal 102 and searches a category information database 105 in accordance with the request. The data transfer system 101 determines the server 101 that matches the genre or melody data contained in the request in accordance with those search results, and transfers the request to the determined server 101.

In order to accomplish this process, the data transfer system 101 is provided with hardware, including a CPU 106 and a bus 107. The CPU 106 is connected via the bus 107 to RAM 108, flash memory 109, a network interface 110 and a hard disk drive (HDD) 111. The flash memory 109 stores control programs and setting data. The CPU 106 controls the hardware as a whole in accordance with instructions from those control programs. The HDD 111 stores the category information database 105.

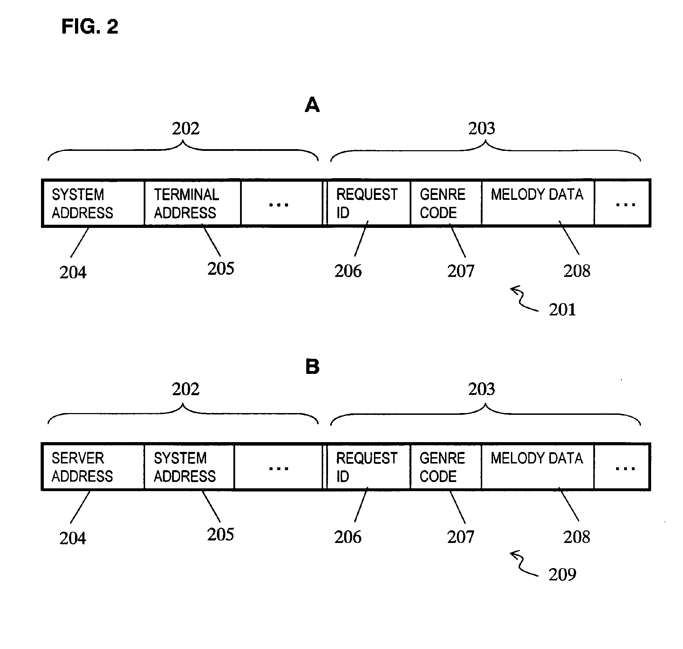

Figs. 2A and 2B each show examples of data transmitted when music contents are requested of a server from the terminal. Fig. 2A shows one example of the request data that is sent to the data transfer system from the terminal. The request data 201 includes a header portion 202 and a data payload portion 203. The header portion 202 has fields 204 and 205 that state the sender and recipient. In the recipient field 204, the data transfer system address is stated, while in the sender field 205, the address of the terminal is stated. The data payload portion 203 includes a request ID 206 that identifies the request, a genre code 207 and melody data 208. The genre code 207 and melody data 208 are specified by the terminal 102 when the user makes the request. Fig. 2B shows one example of process request data send to the server from the data transfer system. In this example, process request data 209 has the values in the sender field 204 and the recipient field 205 from the request data 201 changed. In this process request data 209, the address of the server is stated in the recipient field 204 while the address of the data transfer system is stated in the sender field 205.

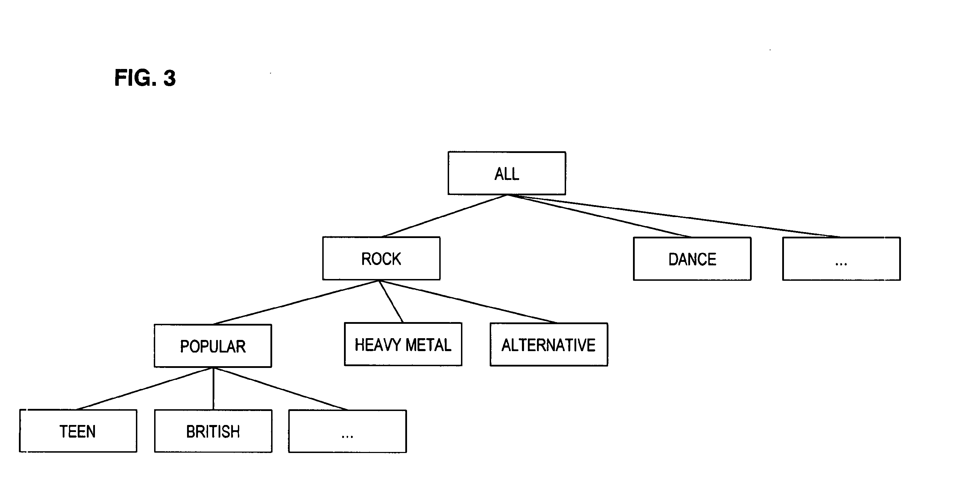

Fig. 3 is a drawing illustrating one example of the hierarchical relationship among genres contained in the category information database. The category information database links and stores the addresses of the servers and genre codes in which music contents are categorized hierarchically. In the example in Fig. 3, the large categories of music contents include the genres "rock" and "dance." The genres of the medium categories on the level below "rock" include "popular rock," "heavy metal" and "alternative." The genres in the small categories on the level below "popular rock" include "teen pop" and "British rock." This kind of hierarchical relationship is given to each genre of music contents. The category information database links the addresses of the servers with these various genres. For example, the address of the server with the largest number of stored tunes for a genre could be linked to the code for the genre. When the server with the largest number of stored tunes of music contents is linked to a genre, the server having the largest number stored for music contents is linked to the topmost genre "all." However, although this has the largest total number stored for music contents, the server does not necessarily store more contents than other servers in all genres.

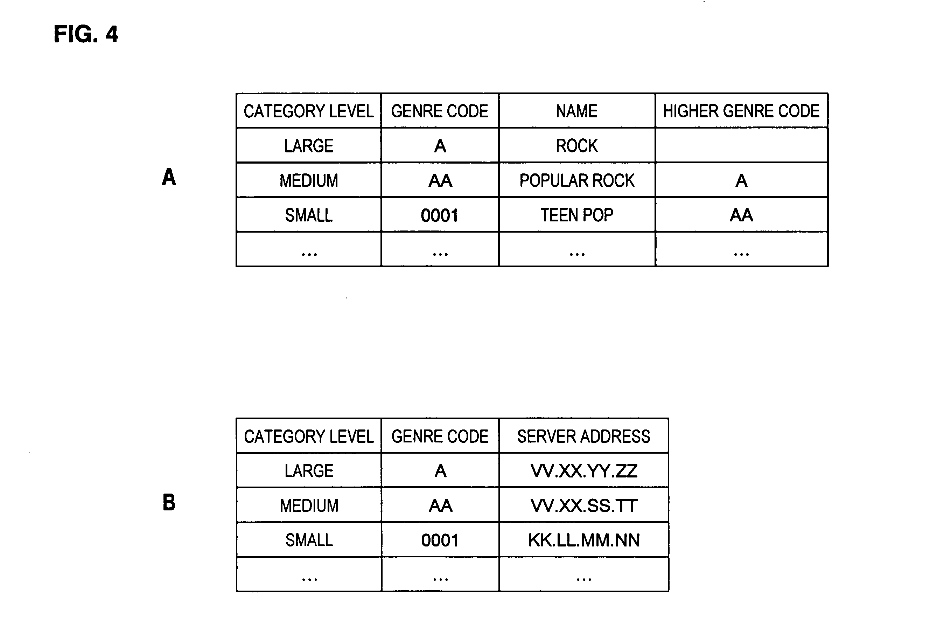

Fig. 4 is a drawing illustrating one example of the data structure in the category information database. Fig. 4A shows one example of a database in which the hierarchical relationship of the genres is stated, while Fig. 4B shows one example of linking the genre codes and server addresses. The category information database can contain two databases of this kind. In the example in Fig. 4A, each record includes the category level, genre code and name. For records whose name is "rock," the symbol A is given as the genre code. For records whose name is "popular rock," the symbol AA is given as the genre code. In addition to category code and the like, the records also contain higher genre codes. The hierarchical relationship is stated by this higher genre code. The higher genre code is the code of the genre that is immediately above the genre in question. For example, the parent-child relationship between the genres "rock" and "popular rock" is stated by including the category code for "rock" as the higher genre code in the record for "popular rock." In addition, in the example in Fig. 4B, each record includes the category level, genre code and server address. Through these records, the genre codes are linked to the addresses of the servers 101. For example, the server address "VV.XX.YY.ZZ" is linked to the genre code "A."

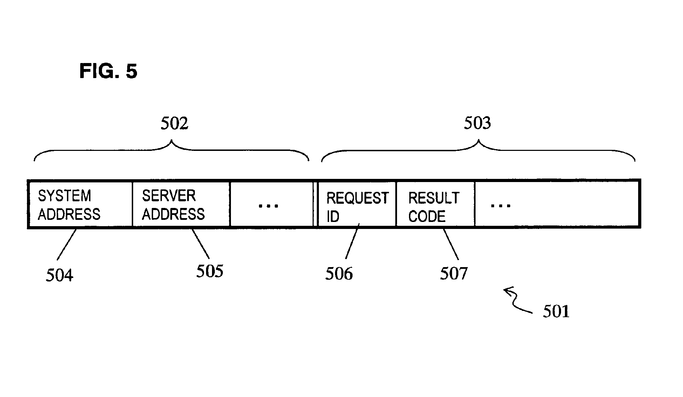

Fig. 5 shows one example of response data sent to the data transfer system from a server. The server, upon receiving a process request from the data transfer system, determines whether or not to accept the process request and creates response data in accordance with the result. When the determination is to not accept the request, an unprocessed notification indicating that the request has not been processed is sent as response data to the data transfer system.

Like the request data, the response data 501 includes a header portion 502 and a data payload portion 503. The header portion has fields 504 and 505 that state the recipient and sender. In the recipient field 504, the address of the data transfer system is stated, while in the sender field 505, the address of the server sending the unprocessed notification is stated. The data payload portion 503 includes the request ID 506 and result code 507. In the result code 507 a value can be stated that indicates whether or not processing was accomplished on the request specified by the request ID 506. When a value indicating that processing was not accomplished is written in the result code 507, the response data is an unprocessed notification. When a value indicating that processing was accomplished is written in the result code 507, the response data is a process complete notification.

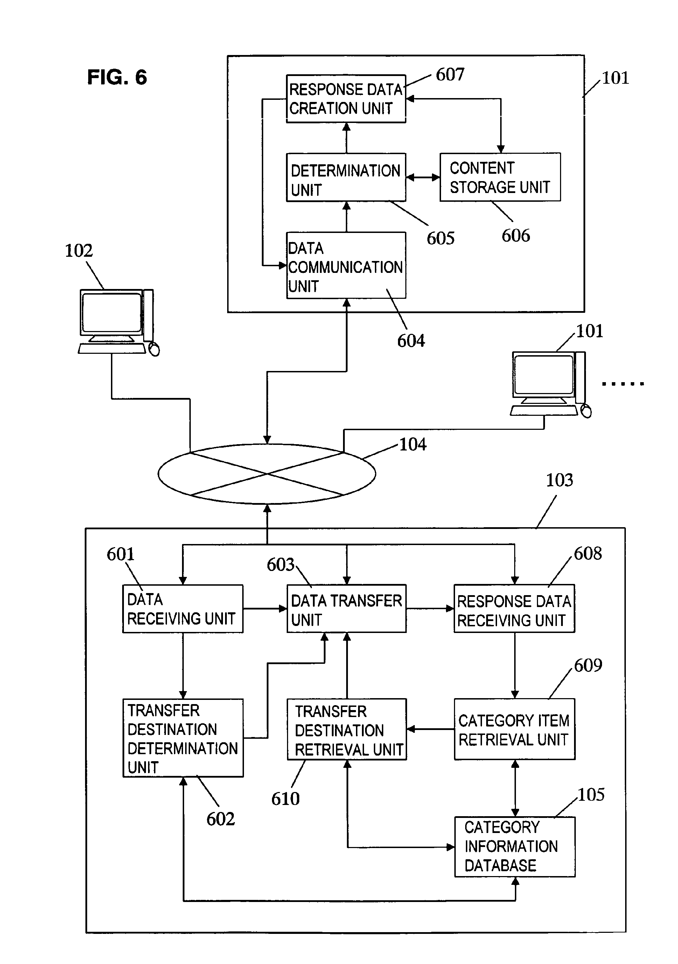

Fig. 6 is a function block diagram illustrating the schematic configuration of the data transfer system of the first embodiment. In the data transfer system 103, the CPU accomplishes input and output to the category information database 105 and the like in accordance with instructions from the control program, and the necessary functions are realized. In the data transfer system 103, request data from the terminal 102 is received by a data receiving unit 601. The request data includes the genre code or melody data, as described above. When data has been received by the data receiving unit 601, a transfer destination determination unit 602 determines from among the plurality of servers 101 the transfer destination for the received data. The genre code can be used in this determination. For example, the transfer destination determination unit 602 acquires the genre code from the received data and retrieves from the category information database 105 for a record that includes the acquired genre code. The transfer destination retrieval unit 602 determines the address of the server 101 containing the retrieved record as the transfer destination of the received data. A data transfer unit 603 creates process request data from the requested data received by the data receiving unit 601 and sends the created data to the server 101 determined by the transfer destination determination unit 602.

In the server 101, a data communication unit 604 receives the process request data from the data transfer system 103. A determination unit 605 determines whether or not to provide music contents in accordance with the request. This determination can be made using melody data included in the process request data. In this embodiment, a content storage unit 606 stores melody data prepared in advance for music contents, along with the music contents. The determination unit 605 calculates the degree of similarity between the melody data acquired from the process request data and melody data read from the content storage unit 606.

When there is music content for which the calculated degree of similarity is higher than a threshold value, the determination unit 605 makes the determination to provide the music contents. In this case, the server 101 provides to the requesting terminal 102 the contents read from the content storage unit 606. When there are multiple items of music contents for which the calculated degree of similarity is higher than the threshold value, a list of contents may be sent prior to sending the music contents data to the user terminal 102, or the contents data may be sent to the terminal 102 in the order of highest degree of similarity. When the music contents are provided to the terminal 102, a response data creation unit 607 sends to the data transfer system 103 a process complete notification including the request ID and a result code that states a value indicating that processing was accomplished.

In contrast, when there are no music contents for which the calculated degree of similarity is higher than the threshold value, the determination unit 605 determines that no music contents will be provided. In this case, the response data creation unit 607 creates an unprocessed notification using the request ID acquired from the received process request data. The data communication unit 604 sends the created unprocessed notification to the data transfer system 103.

In the data transfer system 103, a response data receiving unit 608 receives response data from the server 101 to which the request was transferred. When the unprocessed notification is received by the response data receiving unit 608, a category item retrieval unit 609 searches the category information database 105 on the basis of the sender of the unprocessed notification. The category item retrieval unit 609 acquires the address of the server that sent the unprocessed notification from the sender field of the unprocessed notification. The category item retrieval unit 609 retrieves a record containing the address from the category information database 105 and acquires a genre code corresponding to the address. When the address of the server that sent the unprocessed notification is "W.XX.YY.ZZ," it is possible to acquire "A" as the genre code from the record containing the address.

When the genre code is acquired, the category item retrieval unit 609 retrieves, for example, the genre belonging to the sublevels of the genre from the category information database 105. The category item retrieval unit 609 retrieves the category information database 105 for a record that includes in the higher genre code the same value as the acquired genre code. Through this, the lower genre code is acquired. If the acquired genre code is "A", it is possible to acquire "AA" as the genre code from the record for "popular rock," which includes the value of the code as the higher genre code. If there are multiple lower genres, one of them may be selected at random, for example, to acquire a selected genre code.

In addition, the category item retrieval unit 609 can retrieve the genre using not just the address of the server 101 that sent the unprocessed notification but also using other data received from the server 101. In that case, the server 101 should preferably send the necessary data included in the response data. For example, the server 101 may send to the data transfer system 103 degree of similarity data indicating the maximum value of the degree of similarity of the melody data, included in the response data. The category item retrieval unit 609 retrieves the genre that corresponds to the new transfer destination of the unprocessed data on the basis of the genre code acquired in accordance with the address of the server 101 that sent the unprocessed notification, and the degree of similarity data. When the degree of similarity value given by the degree of similarity data is at least as large as a predetermined threshold value, the category item retrieval unit 609 retrieves from the category information database 105 a genre belonging to a lower level than the genre corresponding to the address of the server that sent the unprocessed notification, as discussed above. In contrast to this, when the degree of similarity value given by the degree of similarity data is smaller than the threshold value, the category item retrieval unit 609 retrieves a genre belonging to a higher level than the genre corresponding to the server address, or retrieves another genre belonging to the same level. When retrieving a genre belonging to a higher level than the genre corresponding to the address of the server that sent the unprocessed notification, the category item retrieval unit 609 acquires from the category information database 105 the higher genre code linked to that genre code. In addition, when retrieving another genre belonging to the same level, the category item retrieval unit 609 acquires from the category information database 105 a higher genre code linked to the code of the genre acquired in accordance with the address of the server that sent the unprocessed notification. The category item retrieval unit 609 retrieves from the category information database 105 a record that includes in the higher genre code a value that is the same as the acquired higher genre code, and acquires the genre code from the retrieved record.

A transfer destination retrieval unit 610 retrieves from the category information database 105 a server 101 that will be the new transfer destination of the unprocessed data, on the basis of the genre code retrieved by the category item retrieval unit 609. When a genre code is acquired by the category item retrieval unit 609, the transfer destination retrieval unit 610 acquires the address of the server 101 corresponding to the genre code by retrieving the record containing the genre code from the category information database 105. If the genre code retrieved by the category item retrieval unit 609 is "AA," the transfer destination retrieval unit 610 acquires "VV.XX.SS.TT" as the address of the server.

The data transfer unit 603 transfers the unprocessed request data to the server 101 retrieved by the transfer destination retrieval unit 610. For example, by writing the address of the acquired server 101 in the header portion of the process request data, it is possible to change the existing process request data into process request data for a new transfer destination.

As stated above, with the data transfer system of this embodiment, the transfer of the request to servers is repeated until it is possible to provide the music contents, even when the provider of the music contents is not explicitly stipulated. The transfer destination in this case is determined in accordance with the hierarchical relationship of the genres of the music contents. Accordingly, it is possible to transfer requests quickly to the appropriate transfer destination for providing the music contents.

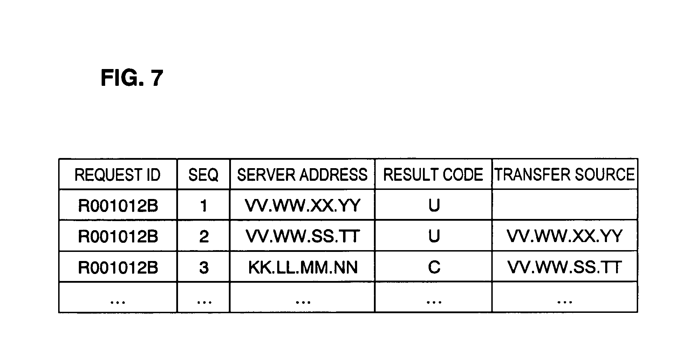

Fig. 7 is a drawing illustrating one example of the data structure in the transfer information database for managing transfer history. In the data transfer system, it is possible to build the transfer information database on the HDD. The data transfer system writes data to the transfer information database when process request data is sent to a server and when response data is received from a server. By using the data, the data transfer system can manage transfer conditions and use the data in determining transfer destination. In the transfer information database, each record includes the request ID, the sequence number (SEQ), the server address, a result code and transfer source data. The sequence number is a number indicating the sequence in which the record is recorded for a single request ID. The largest number corresponds to the number of times the process request was transferred to servers for the same request. The server address is the address of the server to which the process request is transferred. The result code is a code included in the response data received from the server. In this example, the value "U" corresponds to an unprocessed notification and the value "C" corresponds to a process complete notification. The transfer source is the address of the server to which the process request is transferred the first prior time when the process request has been transferred multiple times. Through this kind of data management, it is possible to specify the transfer route until a process complete notification is received. In the example in Fig. 7, for request ID R001012B, three transfers were necessary before processing was completed. In the transfer route in this case, the request was transferred, in order, to server addresses "VV.WW.XX.YY", "VV.WW.SS.TT" and "KK.LL.MM.NN". Replacing these with the genres corresponding to the servers, the request was transferred, in order, to "rock," "popular rock" and "teen pop."

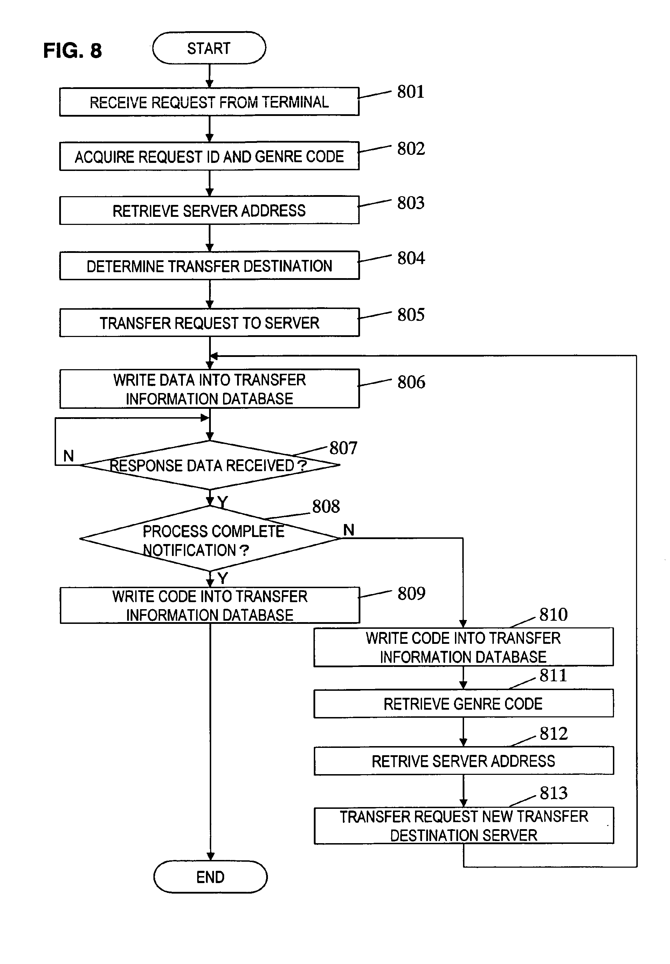

Fig. 8 is a flowchart illustrating one example of the process procedures on the data transfer system. The CPU of the data transfer system executes these procedures in accordance with instructions of the control program and writes data to the transfer information database. When a request is received from the terminal (step 801), the CPU acquires the request ID and genre code from the request data (step 802). The CPU then accesses the category information database on the HDD via the bus and retrieves the address of the server corresponding to the genre code (step 803). The CPU decides on the retrieved server address as the transfer destination of the received request (step 804). When the transfer destination of the request is determined, the header portion of the data of the request is overwritten and the process request data for the server is created. The CPU writes the address of the transfer destination server in the recipient field of the header portion and writes the address of the data transfer system in the sender field. The CPU then transfers the process request data to the server using the network interface (step 805). After transferring the process request data, the CPU creates a record containing the server address and the request ID of the process request data and writes this in the transfer information database on the HDD (step 806). Because this is the first transfer for the same request, "1" is written in the sequence number of the record.

After the process request data is sent to a server, when response data is received from the server (step 807), the CPU acquires the result code and request ID from the response data. The CPU then determines whether or not a process complete notification or unprocessed notification was received from the server (step 808). When a process complete notification was received, the CPU retrieves the r record with the largest sequence number that also includes the request ID acquired from the response data. The CPU writes the result code acquired from the response data to the record (step 809). Even in the case when an unprocessed notification is received, the result data acquired from the response data is similarly written to the record (step 810). Furthermore, the CPU acquires the address of the server from the record. The CPU retrieves from the category information database the genre code corresponding to the acquired server address (step 811). The CPU acquires from the category information database a different genre code based on the retrieved genre code. The CPU retrieves from the category information database the address of the server corresponding to the acquired genre code (step 812). Through this, a new transfer destination for the request from the terminal is determined. When the address of the server that is the new transfer destination is retrieved, the process request data is changed by writing the address of the server in the recipient field of the header portion. The CPU then transfers the process request data to the server using the network interface (step 813). After transferring the process request data, the CPU repeats the steps from step 807 until a process complete notification is received. Even for the second and later transfers, a record is created that includes the request ID of the process request data and the server addresses, and this is written to the transfer information database on the HDD. For the second and later transfers, a number one larger than the sequence number of the immediately prior record is written as the sequence number. Furthermore, for the second and later transfers, the server address from the immediately prior record is written to the transfer source of the record.

In this manner, the data transfer system swiftly transfers the request to a server on which are stored music contents that match the genre the user desires or a favorite melody of the user. The server can provide music contents to the terminal in accordance with the request. Furthermore, by recording the transfer history in the transfer information database, it is possible to manage the transfer status and use this information in determining the transfer destination.

For example, using the history data recorded in the transfer information database, by changing the relationship between genres it is possible to easily determine a suitable transfer destination and as a result to increase transfer efficiency. In the example in Fig. 7, three transfers were necessary for the same request as has already been explained. This number of transfers could increase if differentiation of genres is difficult to the user. In particular, in cases in which a new music genre has been formed, it is difficult to specify in what portion of the hierarchical classification system that genre should be positioned. Genres with large numbers of transfers can be specified using history data recorded in the transfer information database. The number of transfers required until a process complete notification is received from the server linked to the genre may be tabulated for each genre. If the data structure is as in Fig. 7, the records containing a result code "C" are extracted for each server address and the number of sequence numbers contained in the extracted records is tabulated for each server address. The server address is linked to the genre code. Therefore, by tabulating this number for each server address, it is possible to obtain the tabulated number of transfers for each genre. When this tabulated value is larger than a predetermined threshold value, the genre can be specified as a genre with a large number of transfers. Genres stipulated as such are linked to genres other than genres belonging to the level immediately above the genre. Through this, it becomes easier to retrieve genres with a large number of transfers and transfer efficiency is thus improved.

In addition, even the genres that are linked to genres with a large number of transfers can be determined using the history data recorded in the transfer information database. As shown in Fig. 7, the history data contains, as the server address, the data on the transfer destination prior to the receiving of a process complete notification from the server that is linked from. In the example in Fig. 7, prior to receiving a process complete notification from server address "KK.LL.MM.NN", the request data is transferred to server addresses "VV.WW.XX.YY" and "VV.WW.SS.TT." Genres corresponding to the transfer destination included with high frequency in these transfer destinations prior to the receiving of the process complete notification are defined as linked-to genres. For example, the number of times a request is transferred to transfer destination prior to the receiving of the process complete notification is tabulated for each transfer destination. When the tabulated value is larger than a predetermined threshold value, the genre corresponding to the transfer destination is stipulated as a linked-to genre. Through this, the number of transfers can be kept to a minimum so that it becomes possible to complete processing more swiftly.

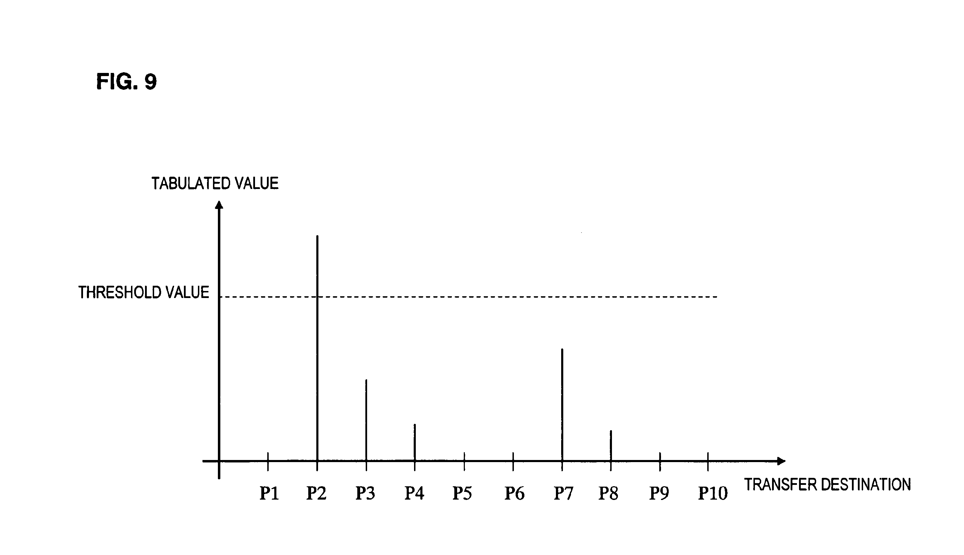

Fig. 9 is a drawing illustrating one example of tabulation, for each transfer destination, of the number of times the request is transferred to the transfer destination prior to receiving the process complete notification. On the horizontal axis are arranged the transfer destinations from P1 through P10 until the receiving of the process complete notification from the server corresponding to the linked-from genre. Because tabulation is accomplished for multiple requests, the transfer destinations to which any of the requests were transferred even once are arranged. The vertical axis shows the tabulated value for the number of times each transfer destination was included in the transfer destinations prior to receiving the process complete notification from the server corresponding to the linked-from genre. In this example, transfer destinations P2, P3, P4 and P7 are included in the transfer destinations prior to receiving the process complete notification from the server corresponding to the linked-from genre. Of these transfer destinations, the tabulated value for the transfer destination P2 exceeds the predetermined threshold value. This shows that there is a high probability that a request will be transferred to the transfer destination P2 before to the server corresponding to the linked-from genre. For this reason, if the genre corresponding to the transfer destination P2 is stipulated as a linked-to genre, the number of transfers can be reduced and it will become possible to complete processing more swiftly.

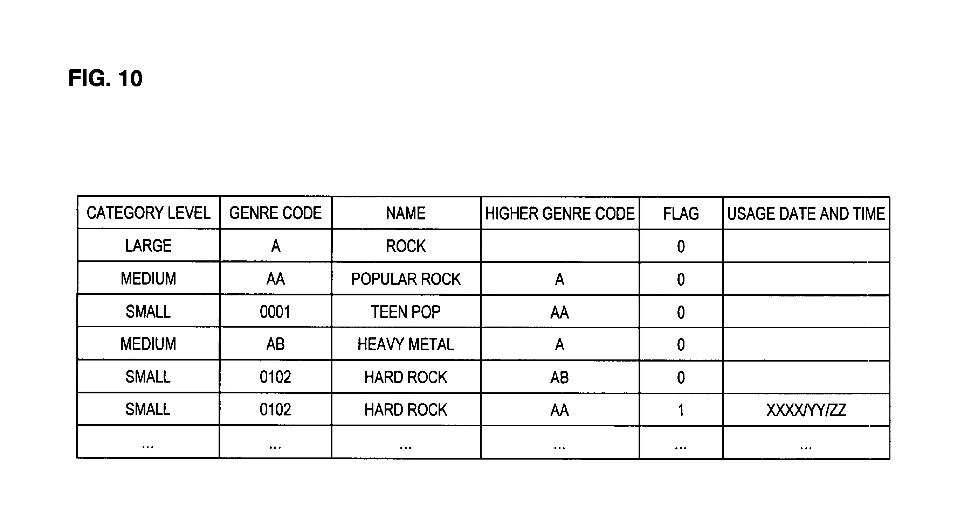

Fig. 10 is a drawing showing one example of the data structure in the category information database for linking between genres. Links between genres as stated above can be registered in the category information database. For that reason, each record in the category information database in this example has a relationship change flag in addition to a classification level, a genre code, a name and a higher genre code. The relationship change flag is a flag for temporarily changing the relationship between genres for purposes of transfers without changing the classification system itself of the genre. When the relationship change flag is "0", records containing the value are indicated to be records for expressing the classification system of the genre. With the record, the genre code is linked to the code of the genre belonging to the immediately higher level in the classification system, the same as in the example in Fig. 4A. In contrast to this, when the relationship change flag is "1", records containing the value are indicated to be records for changing the relationship between genres temporarily for the purpose of transfers. With such records, the higher genre code is a genre code other than a genre belonging to the immediately higher level in the classification system. Because this is determined using the tabulated value for each transferee as stated above, the higher genre code is not necessarily the code of a genre belong to a higher level.

In the example in Fig. 10, there are two records containing "hard rock" as the name data. One of those contains "0" as the value of the relationship change flag while the other contains "1" as the value of the relationship change flag. The former record contains "AB" as the higher genre code, meaning that "hard rock" belongs to the level immediately below "heavy metal" in the classification system. The latter record contains "AA" as the higher genre code, meaning that "hard rock" is also linked to "teen pop."

In addition, each record in the category information database is further provided with a data item for usage date and time, as shown in Fig. 10. The usage date and time data item is used for removing links. Even in cases where genre distinction is difficult to the user, such as newly established genres, when time has elapsed that distinction becomes known to users. In this case, the linkage becomes unnecessary. Accordingly, when a predetermined time has elapsed since it was last used, that linkage may be erased. The usage date and time data item is used in order to erase links in this manner. When the CPU of the data transfer system determines the transfer destination using a record that contains a "1" as the value of the relationship change flag, the data of the transfer time is written to the usage date and time item of the record. The CPU appropriately extracts from the category information database records containing "1" as the value of the relationship change flag, and determines whether or not the time to the present from the usage date and time of each record exceeds the predetermined time. When the time from the usage date and time to the present exceeds the predetermined time, the CPU erases the record from the category information database. Through this, it is possible to erase links between genres.

In this way, the process of recording links between genres and the process of erasing such has no effect on the records that express the classification system of genres. Through those processes, it is possible to improve transfer efficiency in conjunction with temporary circumstances without disturbing the basic relationships among genres.

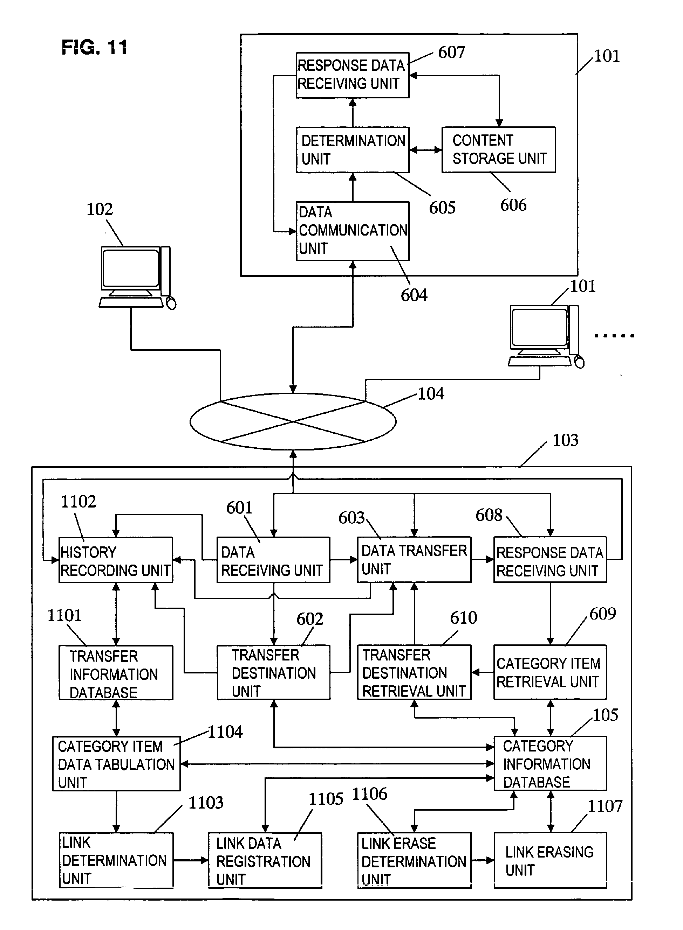

Fig. 11 is a function block diagram showing another example related to the schematic configuration of the data transfer system according to the first embodiment. This data transfer system 103 is provided with a transfer information database 1101 and uses the transfer information database 1101 to temporarily change relations between genres for purposes of transfer. In this example, the database transfer system 103 comprises a history recording unit 1102, a link determination unit 1103, a category item data tabulation unit 1104 and a link data registration unit 1105, in addition to the above-described response data receiving unit 608 and the category information database 105.

In the data transfer system 103, the history recording unit 1102 records in the transfer information database 1101 the history of transfers of requests until a process complete notification is received by the response data receiving unit 608. The history of transfers of requests until a process complete notification is received can be recorded by the CPU of the data transfer system executing the procedures explained in Fig. 8.

The link determination unit 1103 determines whether or not the genre is to be linked to genres other than genres belonging to the level immediately above the genre, on the basis of the history data recorded in the transfer information database 1101. This determination may make use of the results tabulated by the category item data tabulation unit 1104.

The category item data tabulation unit 1104 tabulates the number of transfers until the process complete notification is received from the transfer destination corresponding to the genre, for each genre. The category item data tabulation unit 1104 tabulates the number of transfers for each genre using the history data recorded in the transfer information database 1101. This tabulation can be accomplished as was already explained with reference to Fig. 7. The category item data tabulation unit 1104 extracts records containing the result code "C" from the transfer information database 1101 for each server address and tabulates for each server address the number of sequence numbers contained in the extracted records. By acquiring the genres corresponding to each server address from the category information database 105, the tabulated value of the number of transfers for each genre is obtained. When this tabulated value is larger than a predetermined threshold value, the link determination unit 1103 determines that the genre is linked to a genre other than the genre belonging to the level immediately about the genre. Genres with tabulated values larger than the threshold value become linked-from genres.

Furthermore, the category item data tabulation unit 1104 tabulates for each transfer destination the number of times the request was transferred to a server prior to receiving a process complete notification from the server corresponding to the genre, for each genre. When the category information database 1101 has a data structure as shown in Fig. 7, the category item data tabulation unit 1104 acquires the server address corresponding to the linked-from genre from the category information database 1101. Records containing the server address and the result code "C" are retrieved by the transfer information database 1101 and the request ID is acquired from the retrieved records. Records containing the acquired request ID and the result code "U" are extracted from the transfer information database 1101 for each server address. The category item data tabulation unit 1104 tabulates the number of extracted records for each server address and obtains a tabulated value of the number of transfers prior to receiving a process complete notification for each transfer destination. When the tabulated value for each transfer destination exceeds the predetermined threshold value as shown in Fig. 9, the link determination unit 1103 defines the genre as a linked-to genre.

The link data registration unit 1105 registers the link data in the category information database 105 in accordance with the determination results of the link determination unit 1103. When the link determination unit 1103 has determined the linked-from and linked-to genres as discussed above, the link data registration unit 1105 registers the genre codes of both genres in the category information database 105. The link data registration unit 1105 writes the data item for the value of the linked-from genre code in the genre code and writes the data item of the value of the linked-to genre code in the higher genre code. Furthermore, the value "1" is written in the relationship change flag of the record.

The category item retrieval unit 609 can retrieve the genre corresponding to a new transfer destination for unprocessed data from the category information database 105 in which the relationship data has been registered in this manner. The category item retrieval unit 609 retrieves records from the category information database 105 without relation to the value of the relationship change flag. In the example in Fig. 10, records containing the name "hard rock" are retrieved when the genre record corresponding to the address of the server that sent the unprocessed notification is "AB" or when it is "AA." If the relationship data is not registered, records containing the name "hard rock" are not retrieved except in the case of a genre code of "AB." By registering the relationship data in the category information database 105, it is possible to curtail the number of transfers.

Such data transfer system 103 can also be equipped with a link erase determination unit 1106 and a link erasing unit 1107.

The link erase determination unit 1106 determines whether or not to erase the link data registered in the category information database 105. This determination can be made in accordance with the usage condition of the link data. In order to stipulate the usage conditions, for example the transfer destination retrieval unit 610, upon retrieving the new transfer destination using records containing a "1" in the value of the relationship change flag, writes the transfer time data to the usage date and time data for the record. The link erase determination unit 1106 extracts from the category information database 105 records containing a "1" as the value of the relationship change flag. The link erase determination unit 1106 determines whether or not the time from the usage date and time of the record to the present has exceeded a predetermined threshold value. When the time from the usage date and time to the present exceeds the threshold value, the link erase determination unit 1106 determines to erase the record from the category information database 105.

The link erasing unit 1107 erases the link data from the category information database 105 in accordance with the determination results of the link erase determination unit 1106. The link erasing unit 1107 erases from the category information database 105 records determined by the link erase determination unit 1106.

By thus erasing link data whose usage frequency was low, it is possible to prevent transfer destination candidates from increasing more than necessary. In addition, the link data is managed distinct from the data expressing the classification system of the genres, so even erasing the link data does not influence the data expressing the genre classification system.

The history data registered in the transfer information database 1101 can also be used in other applications. For example, the transfer destination retrieval unit 610 may exclude from retrieval targets transfer destinations to which the same request has already been transferred or genres corresponding to those transfer destinations. Through this, it is possible to prevent a single request from being transferred two or more times to the same transfer destination.

With the embodiment stated above, the present invention was applied to a system that provides music contents, but this is intended to be illustrative and not limiting. The present invention can also be applied to systems providing other contents or information, such as movies.

### (Second Embodiment)

In this embodiment, the present invention is embodied as an inquiry response system with which responsible parties at a company handling various products such as circuit parts, batteries and power supplies respond to inquires from customers. In the first embodiment, the data transfer system automatically determined a new transfer destination for requests. In contrast to this, in the second embodiment the retrieved transferees are sent to the responsible party's terminal and the result selected by the responsible party is received from the responsible party's terminal. A new transferee for the request is determined through the selection result.

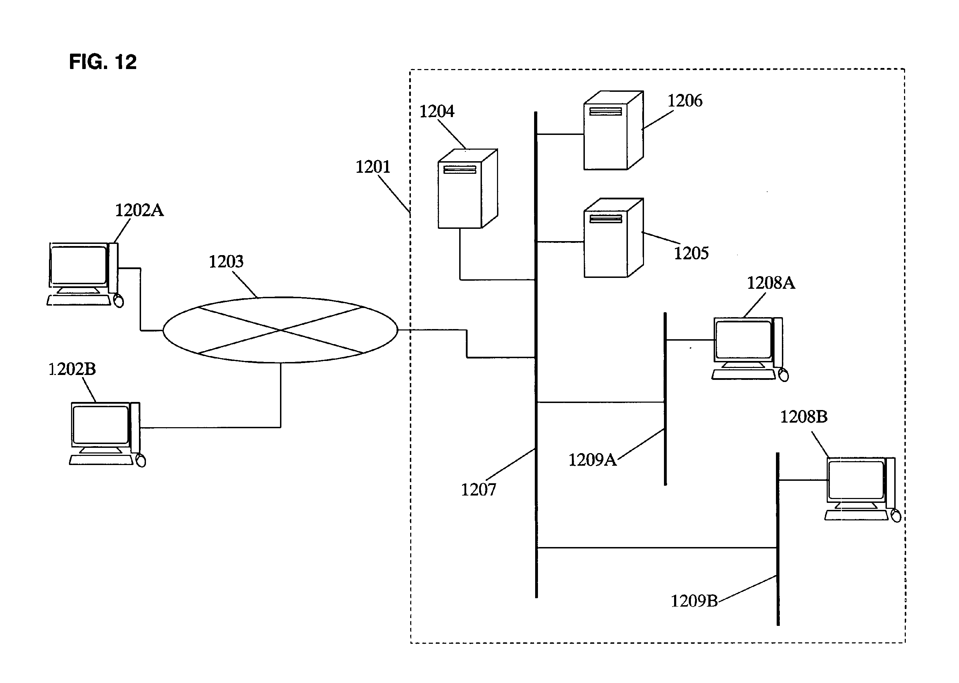

As shown in Fig. 12, in the second embodiment the company' system 1201 and customer terminals 1202A and 1202B are connected via a network 1203 like the Internet. The customer can receive services related to inquiries about products via the network 1203.

In the system 1201 are a Web server apparatus 1204, a database server apparatus 1205 and a mail server apparatus 1206. These server apparatuses 1204 through 1206 are connected via the network 1207 of the company.

In addition, in the system 1201 are terminals 1208A and 1208B of responsible parties who respond to inquires from customers. The responsible party terminals 1208A and 1208B are connected to the network 1207 via networks 1209A and 1209B of in-house organizations to which the responsible parties belong. There may be three or more networks of in-house organizations, and in reality terminals of multiple responsible parties are connected to those networks. If the organizations to which the responsible parties belong differ, sorting of products they handle frequency differs. For example, "Taro Yamada," who uses the terminal 1208A connected to network 1209A handles all "circuit products" such as "capacitors" and "resistors," while the responsible party belonging to a different organization that uses network 1209B handles "lithium rechargeable batteries."

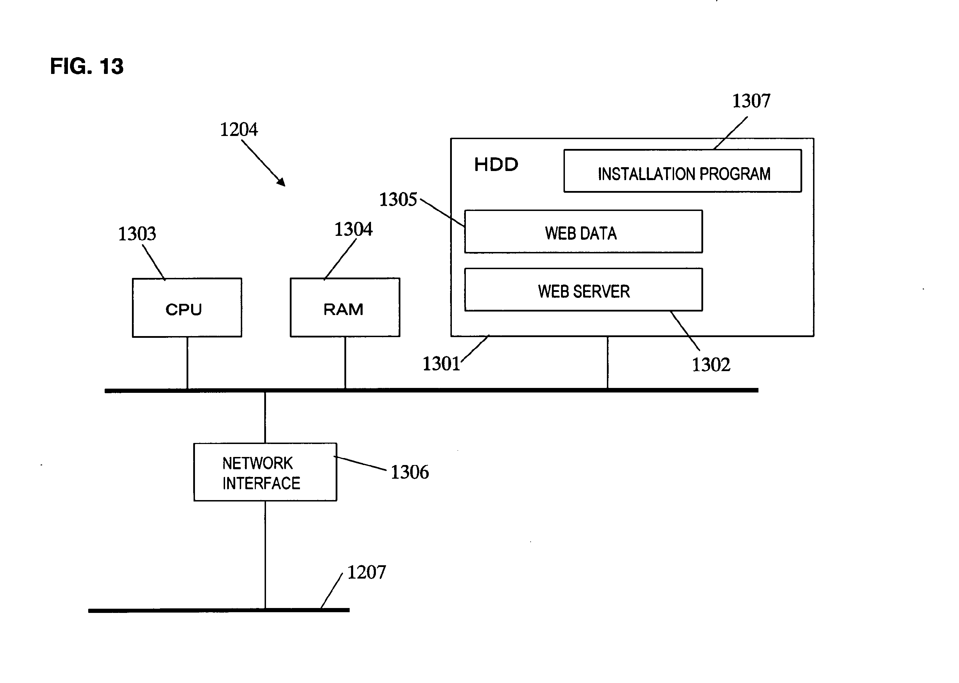

The Web server apparatus 1204 is a computer primarily used in order to provide an interface for customers and responsible parties, and for this computer it is possible to use a general-purpose computer. As shown in Fig. 13, the HDD 1301 of the Web server apparatus 1204 stores executable files for Web server programs. When the Web server apparatus 1204 is started up, the CPU 1303 reads those files 1302 from the HDD 1301 and executes them on RAM 1304. Through this, the operating Web server waits until a request is received from a Web client like a Web browser. When a request is received from a Web client, Web data 1305 corresponding to the request is read from the HDD 1301 and is sent to the requesting Web client. Requests from Web clients contain not just a data transfer request but also a request for processing on the database server apparatus 1205. When this process request is received, the Web server apparatus 1204 communicates with the database server apparatus 1205 via the network 1207 of the company using a network interface 1306.

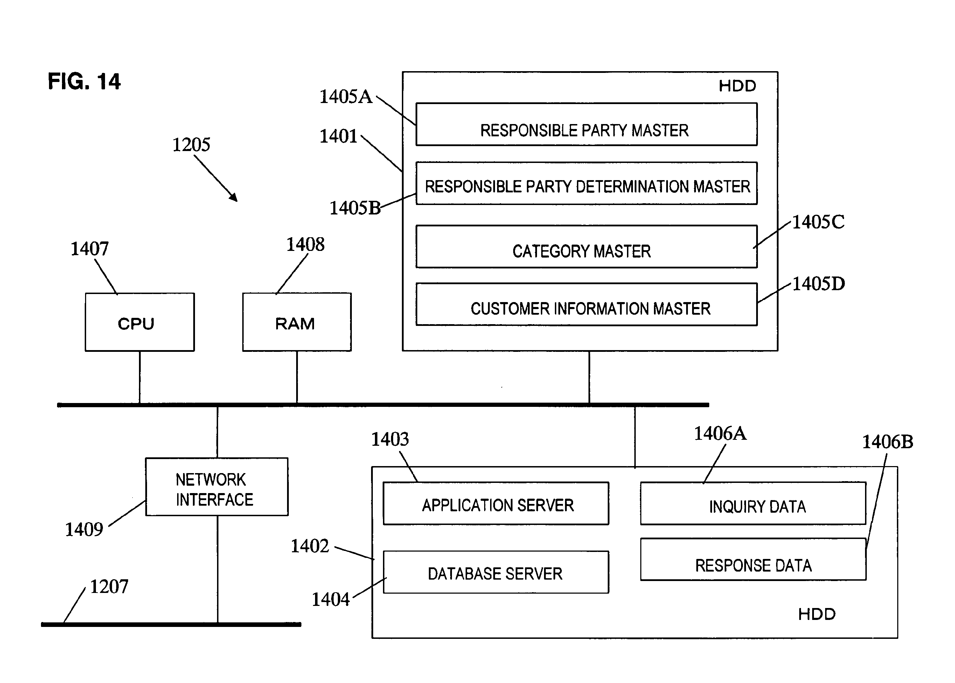

The database server apparatus 1205 is a computer primarily used for managing databases, and for this computer it is possible to use a general-purpose computer. As shown in Fig. 14, the HDD 1401 and 1402 of the database server apparatus 1205 store application server program executable files 1403, database server program executable files 1404, master files 1405A through 1405D and data files 1406A and 1406B. The application server accomplishes the process of delivering data between the Web server and database server as well as other processes. In accordance with requests received from the Web server, processes such as registering, updating and deleting data are requested of the database server, and when there is a response from the database server, Web data is created dynamically as necessary and those results are returned to the Web server. The application server and database server operate by the CPU 1407 reading the executable files 1403 and 1404 from the HDD 1402 and executing them on the RAM 1408. When requests are received from the Web server on the Web server apparatus 1204 and responses are sent to the Web server, the database server apparatus 1205 communicates with the Web server apparatus 1204 via the network 1207 using the network interface 1409.

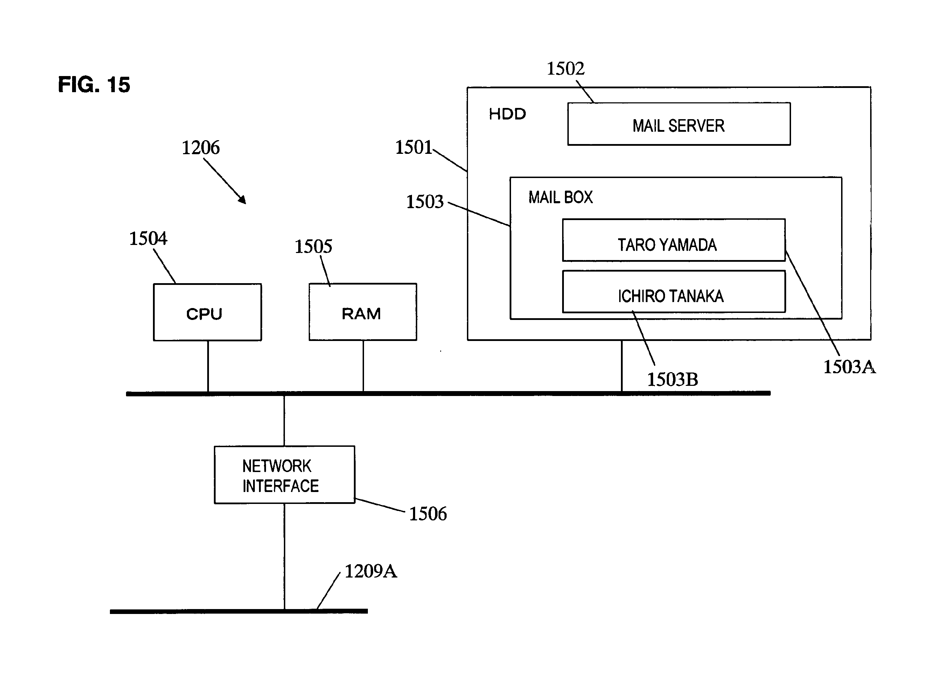

The mail server apparatus 1206 is a computer primarily used for sending mail to customers and responsible parties, and for this computer it is possible to use a general-purpose computer. As shown in Fig. 15, the HDD 1501 of the mail server apparatus 1206 stores an executable file 1502 of the mail server program and a mailbox 1503. When the mail server apparatus 1206 is started up, the CPU 1504 reads the file 1502 from the HDD 1501 and executes it on the RAM 1505, and through this the mail server operates. The mail server contains a program that receives requests from the MUA (Mail User Agent) like a mailer and distributes mail, sends mail to other servers and also distributes received mail to the MUA. The mail server apparatus 1206 uses the network interface 1506 in order to send and receive mail. When mail data to responsible parties is received, the mail server stores the mail data in the mailbox 1503. In the example in Fig. 15, the mailbox 1503A of "Taro Yamada" and the mailbox 1503B of "Ichiro Tanaka" are illustrated. If the addressee on the received mail is "Taro Yamada," the mail data is distributed to mailbox 1503A.

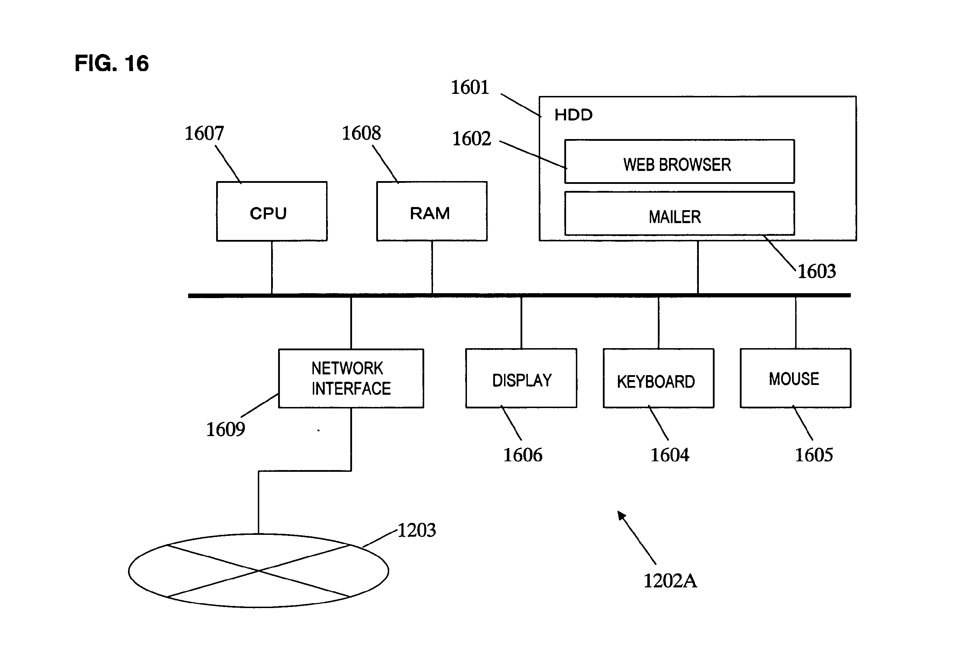

The customer terminals 1202A and 1202B are computers used by the customer to send inquiries and confirm responses to such. General-purposes computers may be used for the terminals 1202A and 1202B as well. As shown in Fig. 16, the HDD 1601 of the terminal 1202A stores a Web browser executable file 1602 and a mailer executable file 1603. The Web browser is used to make inquiries and the mailer is used to confirm responses and notifications regarding inquiries. When there are commands from the user using the display 1606 and input devices such as a keyboard 1604 or mouse 1605, the CPU 1607 reads file 1602 or 1603 from the HDD 1601 and executes such on the RAM 1608. The Web browser operated through this makes transfer requests to the Web server and posts designated data in accordance with the URL (Uniform Resource Locator) input by the customer. When the input URL indicates a resource on the Web server apparatus 1204, the customer terminal 1202A communicates with the Web server apparatus 1204 via the network 1203 using the network interface 1609. The configuration of terminal 1202B is the same as that of terminal 1202A.

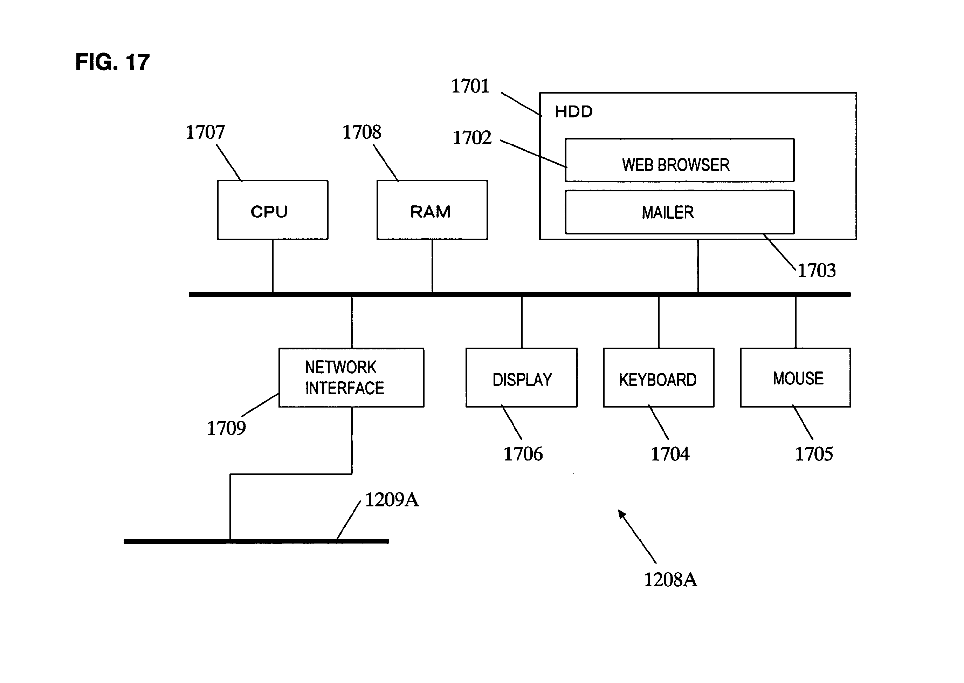

The responsible party terminals 1208A and 1208B are computers used to confirm the content of inquiries from customers and send responses. General-purpose computers may be used for terminals 1208A and 1208B as well. As shown in Fig. 17, the HDD 1701 of the terminal 1208A stores a Web browser executable file 1702 and a mailer executable file 1703. The Web browser is used to confirm inquiries and response to those inquiries, while the mailer is used receive inquiry notifications. When there are commands from the user using the display 1706 and input devices such as a keyboard 1704 or mouse 1705, the CPU 1707 reads file 1702 or 1703 from the HDD 1701 and executes such on the RAM 1708. The Web browser operated through this makes transfer requests to the Web server and posts designated data in accordance with the URL input by the responsible party. When the input URL indicates a resource on the Web server apparatus 1204, the responsible party terminal 1208A communicates with the Web server apparatus 1204 via the networks 1209A and 1207 using the network interface 1709. The configuration of terminal 1208B is the same as that of terminal 1208A.

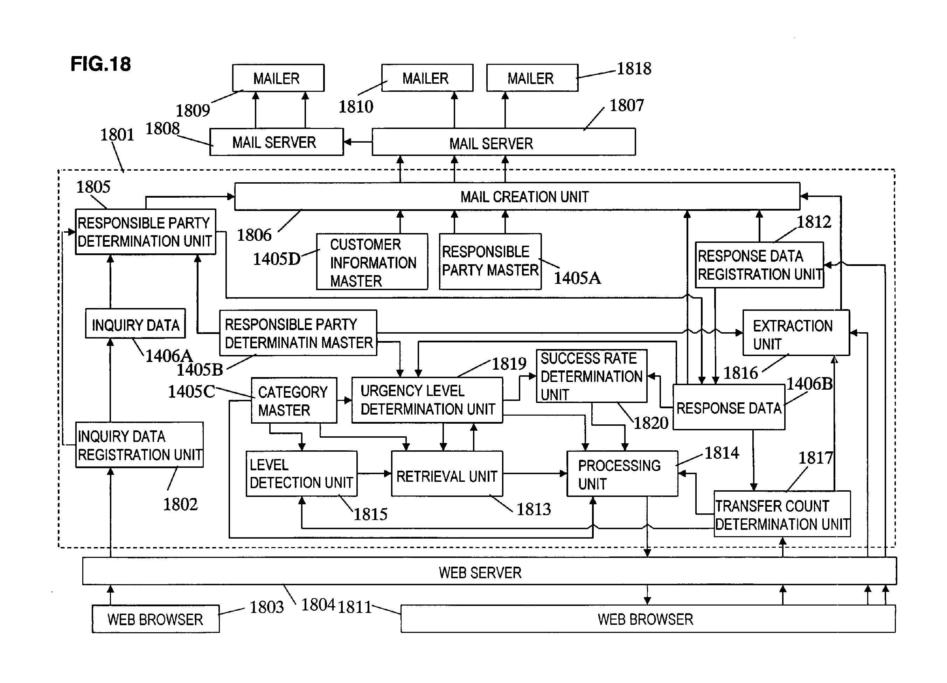

In this kind of inquiry response system, the database server apparatus 1205 functions as the various means of the inquiry response apparatus 1801 shown in Fig. 18 by the CPU 1407 conducting operations and controlling the computer hardware in accordance with instructions from the application server programs.

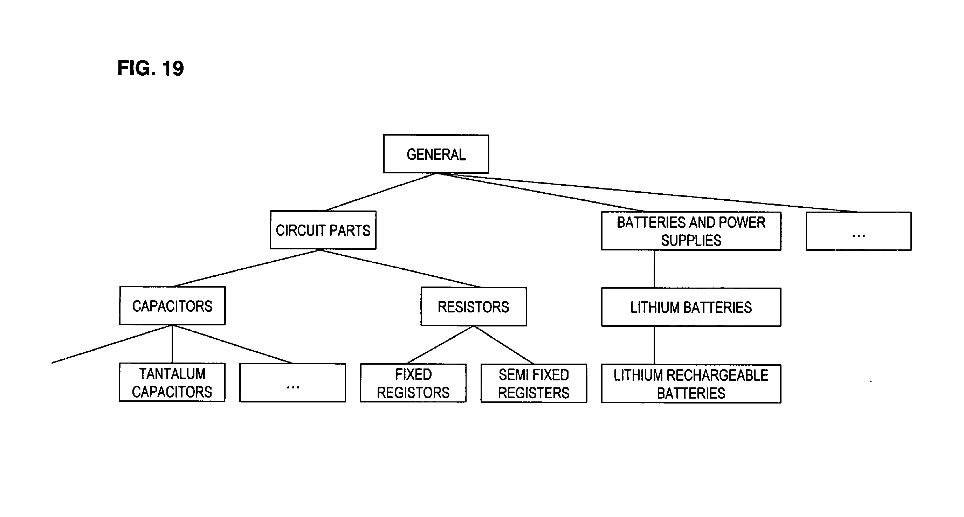

The inquiry response apparatus 1801 determines the responsible party to be notified of the inquiry from the customer. In this embodiment, the products that are the subject of inquiries are classified hierarchically, as shown in Fig. 19. In this example, a tree structure represents the hierarchical classification using the three levels of "large category", "medium category" and "small category". The first through third levels that are below the highest root correspond to the large, medium and small categories. The root is indicated by "general." The first level immediately below "general" has the branches "circuit parts" and "batteries and power supplies." The second level immediately below the first level has the branches "capacitors", "resistors" and "lithium batteries." "Circuit parts" has a parent-child relationship with "capacitors" and "resistors", while "batteries and power supplies" has a parent-child relationship with "lithium batteries." "Capacitors" has a parent-child relationship with "tantalum capacitors," "resistors" with "fixed resistors" and "semi-fixed resistors", and "lithium batteries" with "lithium rechargeable batteries." These category items share some properties with the category items belonging to the levels above the level to which the category item belongs. For example, "lithium batteries" in the second level is a type of "batteries and power supplies" in the first level.

By using data that classifies products hierarchically in this manner, it is possible for a computer to efficiently specify category items using common properties.

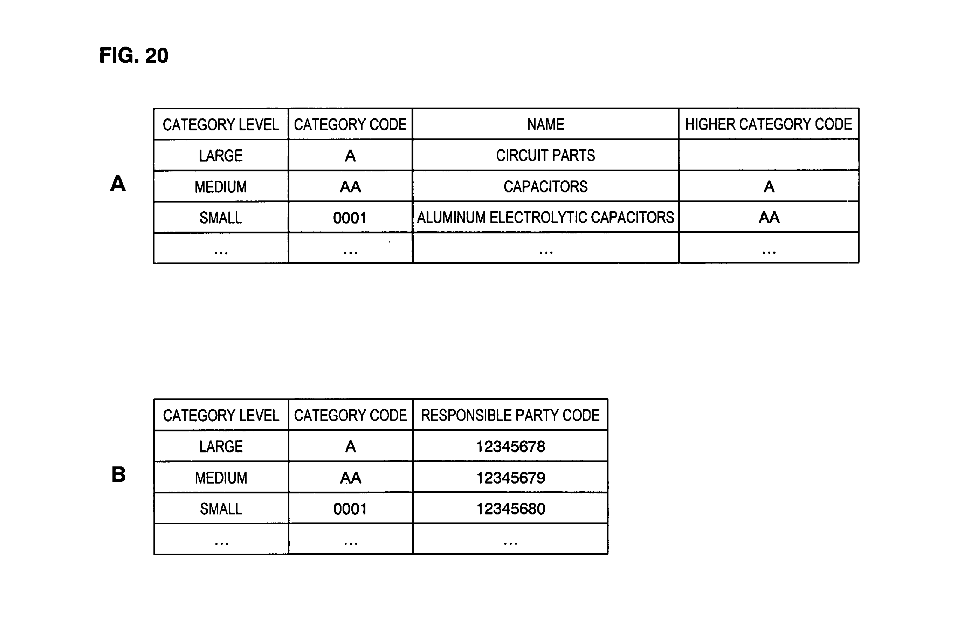

The category master file 1405C stores a table recording the data that hierarchically categorizes products, like data showing the above-described category levels and parent-child relationships. Fig. 20A shows one example of the table. The table typically contains records for all category items, such as the above-described "circuit parts," "batteries and power supplies" and "resistors," and each record has values relating to the fields of category code, name, category level and higher category code. The value for category code is given by a unique symbol for each category item, such as "A," "AA" or "0001". The value for name indicates the name of the category item, such as "circuit parts," "capacitors" or "aluminum electrolytic capacitors." The value for category level indicates the level to which the category item belongs, and for instance is given by "large category," "medium category" and "small category." The higher category code can be given by the category code of the category item belonging to the level immediately above the category item. If the record is a record for "capacitors," the higher category code is given by "A." "A" is the category code of "circuit parts," which is the parent of "capacitors." When the category level of the category is "large category," no higher category code need be given.

The responsible party determination master file 1405B stores a table that records data linking category items and responsible parties, as shown in Fig. 20B. In this example, the category code and category level indicating the category item are linked to the responsible party code. The responsible party code is a unique code given to each responsible party. The responsible party code "12345678" is linked to the category code "A," the responsible party code "12345679" is linked to the category code "AA," and the responsible party code "12345680" is linked to the category code "0001."

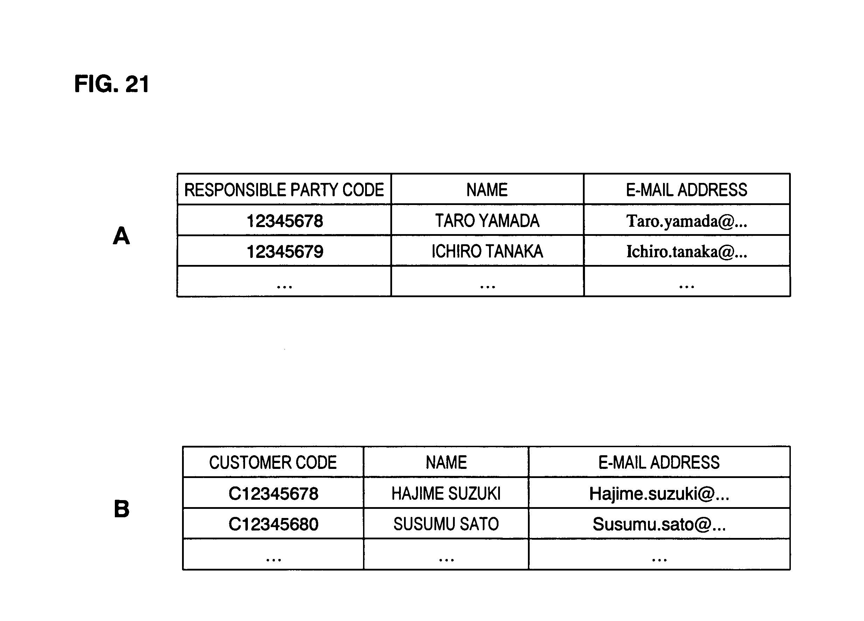

The table that records the data for the responsible parties is stored in the responsible party master file 1405A. As shown in Fig. 21A, the responsible party data is given for fields such as responsible party code, name and email address. Thus the address "Taro.yamada@..." is given to "Taro Yamada" of responsible party code "12345678," and the address "Ichiro.tanaka@..." is given to "Ichiro Tanaka" of responsible party code "12345679."

Furthermore, the customer information master file 1405D stores a table in which is recorded data on customers that make inquires regarding products. As shown in Fig. 21B, the customer data is given for fields such as customer code, name and email address. The customer code is a unique code assigned to each customer, and for example may be expressed with symbol strings such as "C12345678" and "C12345680."

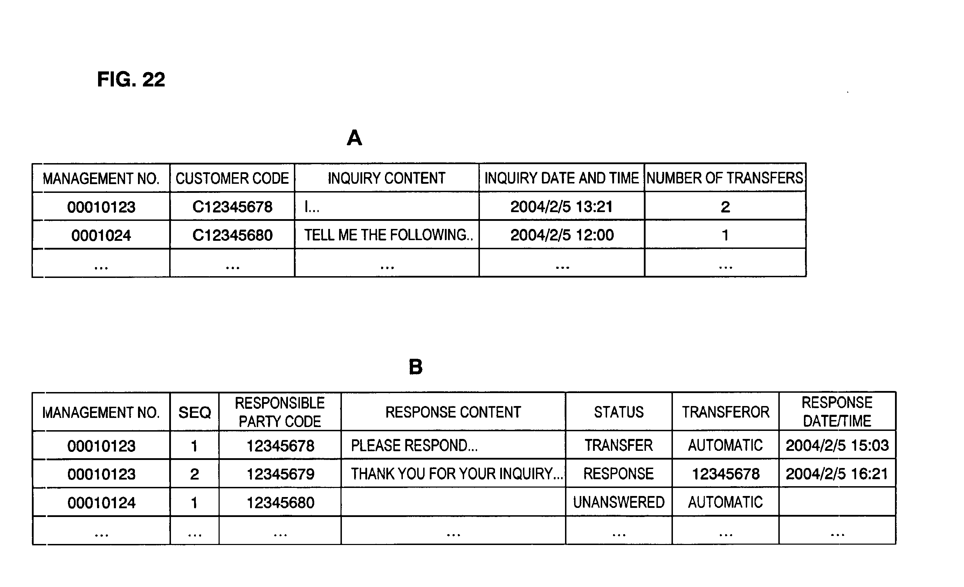

This customer code is contained in the inquiry data. The inquiry data file 1406A stores a table in which is recorded inquiry data such as that shown in Fig. 22A, for example. The table records data relating to fields such as management No., inquiry contents and inquiry date, in addition to customer code. Inquiry contents and inquiry date can be given as text data. Management No. is a unique number string for each inquiry. In the example in Fig. 22A, the data items "00010123" and "0001024" are recorded as management No. When a new inquiry arrives, the inquiry data registration unit 1802 shown in Fig. 18 assigns a management No. to the inquiry.

The inquiry data registration unit 1802 creates inquiry data based on data received from the terminal 1202A or 1202B of the customer who made the inquiry, and registers the inquiry data in the inquiry data file 1406A.

For example, when the customer makes an inquiry using the terminal 1202A, the customer inputs the URL specifying the inquiry form into the Web browser (Web browser 1803 in Fig. 18) on the terminal 1202A. After the input, when there are instructions from the customer, the terminal 1202A, following the instructions of the Web browser 1803, sends the transfer request of the form to the Web server apparatus 1204 through the network 1203.

When the Web server apparatus 1204 receives this request, the CPU 1303 analyses the request in accordance with instructions from the Web server program (Web server 1804 in Fig. 18) and specifies the address of the requester and the data requested. Furthermore, the specified data is read from the HDD 1301 and the read data is sent to the address of the requester using the network interface 1306.

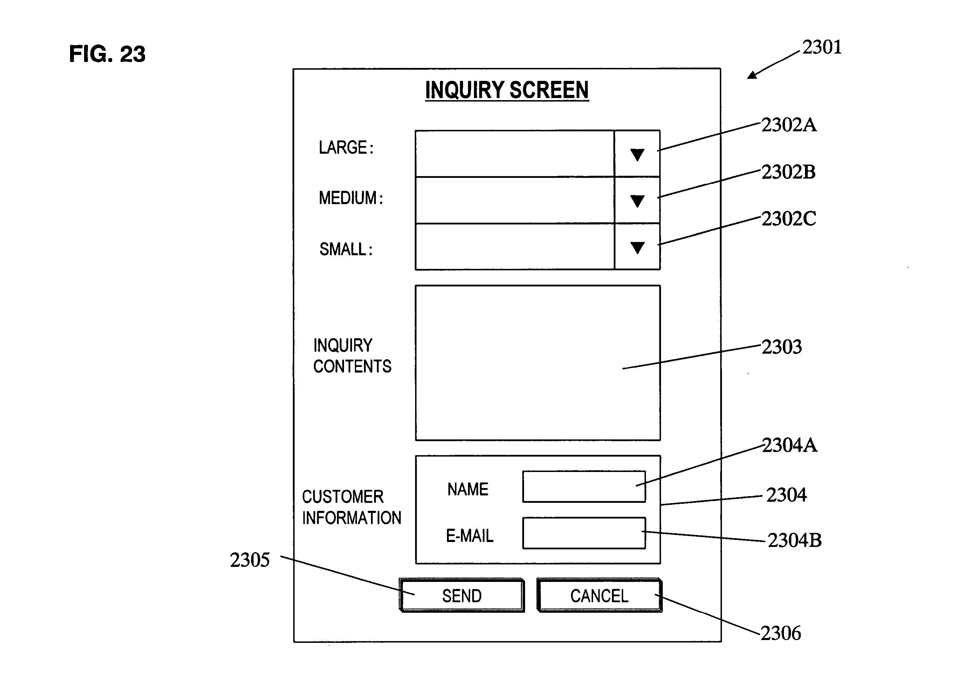

Here, data that expresses an inquiry screen 2301, such as the one shown in Fig. 23, is sent to the terminal 1202A through the network 1203. In this example, on the inquiry screen 2301 are arranged blanks 2302A through 2302C stipulating the category of the product, blank 2303 for inputting inquiry content, blank 2304 for inputting customer information, a button 2305 for transmitting the inquiry and a button 2306 for canceling the inquiry. The blanks 2302A through 2302C stipulating the category are blanks for respectively stipulating a category item of the large category, medium category or small category. In addition, the blank 2304 for inputting the customer information contains a blank 2304A for inputting the name of the customer and a blank 2304B for inputting the mail address the customer uses.

When the data of this kind of inquiry screen 2301 is received by the terminal 1202A, the CPU 1607 displays the inquiry screen 2301 on the display 1606 using the received data. The customer inputs the text data of the inquiry into this inquiry screen 2301 using the keyboard 1604 and specifies the category of the product using the mouse 1605. When the send button 2305 on the inquiry screen 2301 is pressed, the terminal 1202A sends the input data and stipulated data to the Web server apparatus 1204 in accordance with instructions from the Web browser 1803.

When the Web server apparatus 1204 receives data from the terminal 1202A, the CPU analyzes the received data in accordance with instructions from the Web server 1804 and sends data extracted through that to the database server apparatus 1205. The CPU 1407 of this apparatus 1205 functions as the inquiry data registration unit 1802 in accordance with instructions from the application server and creates inquiry data from the data received from the Web server apparatus 1204. To that end, the CPU 1407 extracts from the received data the customer name data and the customer email address data. Furthermore, the CPU 1407 determines whether or not the extracted data has been registered in the customer information master file 1405D. If it has not been registered, a unique customer code is established for the customer and the established customer code is registered in the master file 1405D, linked to the name and email address data. If it has already been registered, the customer code corresponding to the name and email address data is extracted from the master file 1405D. For example, if the customer name is "Hajime Suzuki" and the email address is "Hajime.suzuki@...", then "C12345678" is extracted as the customer code. When the customer code is either established or the registered customer code is extracted, the unique management No. data established for this inquiry, along with the customer code and data relating to the inquiry are linked and stored in the inquiry data file. For example, when "00010123" has been established as the management No. for the inquiry, the extracted customer code "C12345678", the inquiry content data "I am..." and the inquiry date and time data "2/5/2004 13:21" along with the management No. are linked, as shown in Fig. 22A. The inquiry date and time data can be acquired, for example, from the date and time the terminal 1202A sent the data.

The responsible party determination unit 1805 shown in Fig. 18 reads the newly registered inquiry data from the inquiry data file 1406A and determines the responsible party to notify of the inquiry on the basis of the inquiry data. That determination is accomplished, for example, when notification including management No. is received from the inquiry data registration unit 1802.

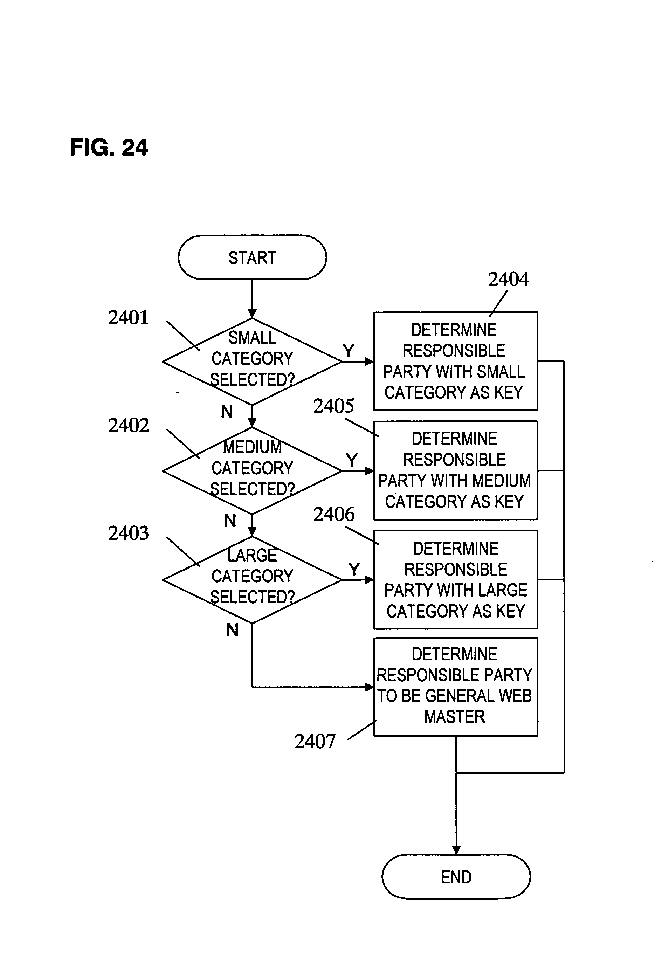

The function of the responsible party determination unit 1805 can be realized by the CPU 1407 following instructions from the application server. When the management No. of the newly registered inquiry data is obtained, the CPU 1407 extracts the inquiry data corresponding to the management No. from the data file 1406A. When the inquiry data contains the category item code indicated by blanks 2302A through 2302C in the inquiry screen 2301 and data on the category level to which the category item belongs, the CPU 1407 determines the responsible party corresponding to the category code, as shown in the procedures shown in Fig. 24. The CPU 1407 determines whether or not the customer selected a category item in a small category on the basis of whether or not the code of a category item belonging to a small category is conducted in the inquiry data (step 2401). When it is determined that the customer did not select a category item in a small category, a determination is made as to whether or not the customer selected a category item in a medium category on the basis of whether or not the inquiry data contains the code of a category item belonging to a medium category (step 2402). When it is determined that the customer did not select a category item in a medium category, a determination is made as to whether or not the customer selected a category item in a large category on the basis of whether or not the inquiry data contains the code of a category item belonging to a large category (step 2403). When a category item in a small category, medium category or large category has been selected, the responsible party is determined using the category item code. The CPU 1407 extracts the responsible party code corresponding to the category code from the responsible party determination master file 1405B (steps 2404 through 2406). For example, if "circuit parts" was selected for large category, the code "12345678" of the responsible party "Taro Yamada" corresponding to the category item code "A" is extracted. If a category item is not selected for any category level, the CPU 1057 sets "general Web master" as the responsible party (step 2407). The "general Web master" is the responsible party corresponding to the category item "general."

When the responsible party who will respond to the inquiry is selected in this fashion, the responsible party determination unit 1805 stores data linking the management No. of the inquiry and the responsible party's code in the response data file 1406B. This function is also realized by the CPU 1407 following instructions from the application server.

As shown in Fig. 22B, the response data file 1406B stores a table that records data linking the management No. with response contents and responsible party code. At the time when the responsible party is determined, the CPU 1407 records only the management No. and the responsible party code in the response data file 1406B. For example, if the management No. is "00010123," data is recorded that links the responsible party code "12345678" to the management No.

The mail creation unit 1806, when a notification containing the management No. is received from the responsible party determination unit 1805, creates mail addressed to the responsible party corresponding to the management No. In this embodiment, mail addressed to the customer who made the inquiry is also created at this time. The CPU 1407 functions as this mail creation unit 1806 following instructions from the application server, and extracts the responsible party code corresponding to the management No. from the response data file 1406B. Furthermore, the CPU 1407 extracts data on the email address corresponding to the responsible party code from the responsible party master file 1405A.

If the management No. is "00010123," "12345678" is extracted from the data file 1406B as the responsible party code corresponding to the management No., and "Taro.yamada@..." is extracted from the master file as the email address corresponding to the responsible party.

In addition, the CPU 1407 extracts the customer code corresponding to the management No. from the inquiry data file 1406A and extracts the email address corresponding to the customer code from the customer information master file 1405D.

If the management No. is "00010123," "C12345678" is extracted from the data file 1056A as the customer code corresponding to the management No., and "Hajime.suzuki@..." is extracted from the master file 1405D as the email address corresponding to the customer code.

In this manner, when the customer who made the inquiry and the responsible party slated to respond to the inquiry are determined, the CPU 1407 creates body data for mail to the customer and mail to the responsible party. The mail to the customer is mail notifying them that the inquiry was received. The text data used in this contact is stored in advance in the HDD 1402 and the CPU 1407 may acquire such from the HDD 1402 as necessary.

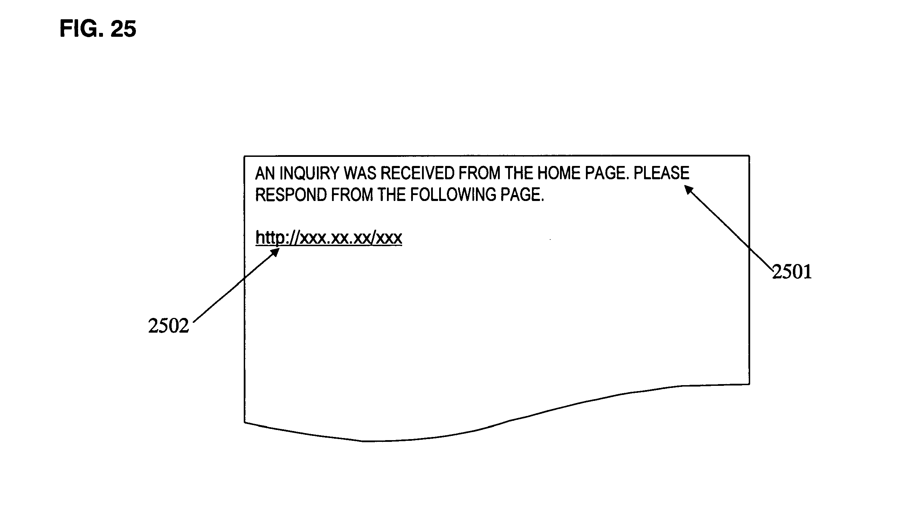

The mail to the responsible party is mail notifying them that an inquiry was made. Fig. 25 shows one example of the mail text sent to the responsible party. In this example, the sentences 2501 "An inquiry was received from the home page. Please respond from the page below" are written in the text. The text data corresponding to these sentences may also be stored in the HDD 1402 in advance. In addition, the mail message to the responsible party may also be provided with a link 2502 to a Web page to confirm the contents of the inquiry. This link 2502 specifies a program stored on the HDD 1301 of the Web server apparatus 1204, for example, and as the argument of the program contains a symbol string corresponding to the management No.

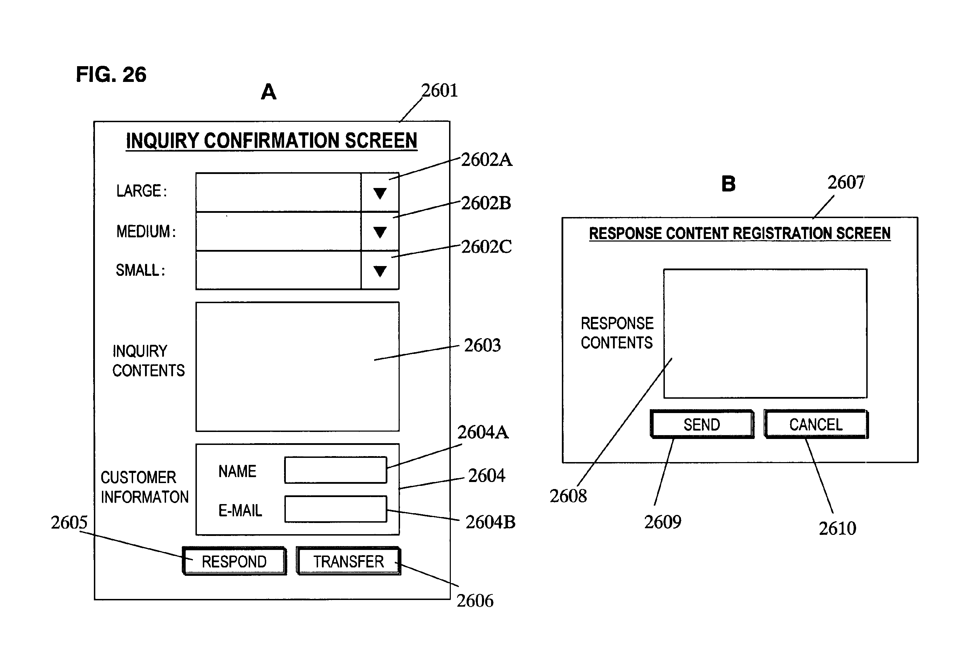

When mail to the customer and to the responsible party is created, the CPU 1407 sends the mail to the mail server apparatus 1206 using the network interface 1409. When the mail is received from the database server apparatus 1205, the CPU 1504 determines whether or not there is a corresponding mailbox following instructions from the mail server on the apparatus 1206 (the mail server 1807 in Fig. 18). When there is no corresponding mailbox, the mail is sent to another mail server 1808 via the networks 1207 and 1203, and when there is a corresponding mailbox, the mail is delivered to the mailbox. In this case, because only mailboxes for responsible parties are stored on the HDD 1501, the mail to the customer is sent to another mail server 1808 and the mail to the responsible party is delivered to the mailbox of the responsible party. The customer who made the inquiry or the responsible party confirms the mail using the mailer 1809 or 1810 on their own terminals. The responsible party "Taro Yamada" can confirm mail stored in the mailbox 1503A using the terminal 1208A that party normally uses. When the responsible party operates the link 2502 placed in the message of the received mail, the Web browser 1811 on the responsible party's terminal is launched and the CPU 1707, following instructions from the Web browser 1811, sends to the Web server apparatus 1204 a transfer request to the Web page for confirming the contents of the inquiry. The request contains the management No. as the argument of the program, as discussed above. When the Web server apparatus 1204 receives the request, the CPU 1303 of the apparatus 1204 analyzes the request and specifies the management No. The CPU 1303 sends a request to extract inquiry data for the specified management No. to the database server apparatus 1205. The CPU 1407 of the apparatus 1205 reads from the inquiry data file 1406A the inquiry data corresponding to the management No. of the request and also reads from the customer information maser file 1405D data on the name and email address of the customer corresponding to the customer code contained in the inquiry data. Furthermore, the CPU creates Web page data corresponding to the data that was read out and sends this to the Web server apparatus 1204. The Web server apparatus 1204 sends the Web page to the requesting terminal 1208A. By having the CPU 1707 interpret the Web page following instructions from the Web browser 1811, it is possible to display an inquiry confirmation screen on the display 1706 of the terminal 1208A. Fig. 26A shows one example of the inquiry confirmation screen.

As shown in Fig. 26A, the inquiry confirmation screen 2601 is basically the same as the inquiry screen 2301 except that a respond button 2605 and a transfer button 2606 are provided in place of the send button 2305 and the cancel button 2306 of the inquiry screen 2301. Besides the respond button 2605 and the transfer button 2605, the inquiry confirmation screen 2601 has blanks 2602A through 2602C for specifying the category of the product, a blank 2603 for displaying the inquiry content and a section 2604 for displaying customer information. The section 2604 displaying the customer information contains a blank 2604A displaying the name of the customer and a blank 2604B displaying the email address that customer uses. The blanks 2602A through 2602C and 2603 basically display the content input into the blanks 2302A through 2302C and 2303 on the inquiry screen 2301.

The responsible party confirms the contents of the inquiry and the category of the product using the inquiry confirmation screen 2601. When as a result of the confirmation it is determined that the responsible party is a suitable responder, the party presses the respond button 2605 using the keyboard 1704 and mouse 1705 of the terminal 1208A. When the user presses the respond button 2605, the CPU 1707 sends a Web page transfer request to the Web server apparatus 1204 in order to display a screen registering the response contents. This request contains the management No. corresponding to the inquiry. When the Web server apparatus 1204 receives the request, the CPU 1303, following instructions from the Web server 1804, reads from the HDD 1301 the basic data of the response contents registration screen. Furthermore, Web page data created from the basic data is sent to the requesting terminal 1208A. When the terminal 1208A receives the Web page data, the CPU 1707, following instructions from the Web browser 1811, displays the response contents registration screen on the display 1706. Fig. 26B shows one example of the response contents registration screen.

As shown in Fig. 26B, a blank 2608 for inputting the text data of the response content, a send button 2609 and a cancel button 2610 are arranged in the response contents registration screen 2607. The responsible party inputs the text data of the response contents corresponding to the contents of the inquiry displayed on the inquiry confirmation screen 2601 into the blank 2608. When the response content data is to be registered, the send button 2609 is pressed, and when the response is to be cancelled, the cancel button 2610 is pressed. When the user presses the send button 2609, the CPU 1707, following instructions from the Web browser 1811, sends to the Web server 1804 on the Web server apparatus 1204 a request to post the data of the input response contents. This request also contains the management No. corresponding to the inquiry. When the Web server apparatus 1204 receives the request via the networks 1207 and 1209A, the CPU 1303, following instructions from the Web server 1804 on the apparatus 1204, analyzes the request and extracts the management No. and response data. Furthermore, the extracted data is sent to the database server apparatus 1205. The CPU 1407 of the apparatus 1205 functions as the response data registration unit 1812 following instructions from the application server.

The response data registration unit 1812 shown in Fig. 18 registers the data of the response received from the terminal of the responsible party in the response data file 1406B. When the management No. and response data are received from the Web browser apparatus 1204, the CPU 1407, following instructions from the application server, registers the received response and the response date and time data in the record corresponding to the management No. out of the records stored in the response data file 1406B.

When the received response data is registered in the response data file 1406B, the response data registration unit 1812 notifies the mail creation unit 1806 of the management No. of the inquiry whose response data was registered. When the mail creation unit 1806 has received notification containing a management No. from the response data registration unit 1812, the mail creation unit creates mail addressed to the customer corresponding to the management No. In this case, the CPU 1407 reads the response data corresponding to the management No. from the response data file 1406B and also reads the email address data for the customer corresponding to the management No. from the customer information master file 1405D. For example, if the management No. is "00010123," "Hajime.suzuki@..." is extracted as the addressee of the mail. The CPU 1407 creates a mail message from the response data. When the response mail has been created, the CPU 1407 sends the mail to the mail server apparatus 1206 using the network interface 1409. When mail is received from the database server 1205, the CPU 1504, following instructions from the mail server 1807, sends the mail to another mail server 1808 via the networks 1207 and 1203. The customer who made the inquiry confirms the mail using the mailer 1809. Through this, the customer can obtain a response to an inquiry.

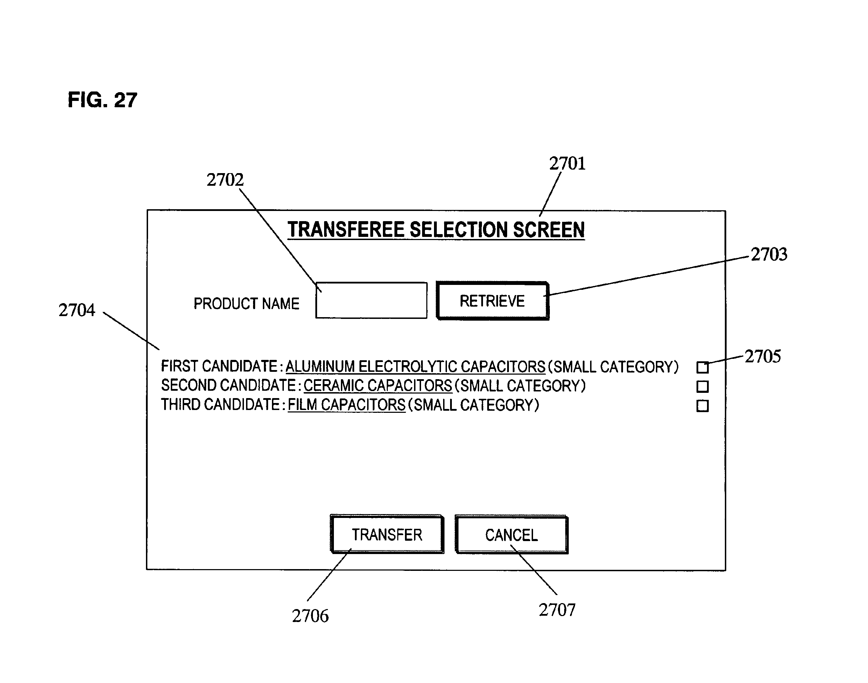

In this manner, a response is provided to the customer when the responsible party notified of the inquiry is a suitable responder. By having the responsible party's terminal send a response, the database server apparatus 1205 is notified that processing was accomplished. In contrast to this, when as a result of the inquiry contents and product category being confirmed on the inquiry conformation screen 2601 it is determined that the responsible party is not a suitable responder, it is possible to switch the party responding to the inquiry to another responsible party. In this case, the transfer button 2606 is pressed using the keyboard 1704 and mouse 1705 of the terminal 1208A. When the user presses the response button 2606, the CPU 1707 sends to the Web server apparatus 1204 a transfer request for a Web page for selecting a transferee responsible party. This request also contains the management No. corresponding to the inquiry. Fig. 27 shows one example of a Web page for displaying a transferee selection screen on the responsible party's terminal.

As shown in Fig. 27, in the transferee selection screen 2701 are arranged a blank 2702 for inputting the product name being searched, a retrieve button 2703, a blank 2704 for displaying the name of the category item being retrieved, buttons 2705 for selecting the category item, a transfer indication button 2706 and a cancel button 2707.

When the Web server apparatus 1204 receives a Web page transfer request to display this kind of screen, the CPU 1303, following instructions from the Web server 1804, sends a request for processing to generate the Web page to the database server apparatus 1205. The request also contains the management No. corresponding to the inquiry. In this embodiment, when the database server apparatus 1205 receives the request, the CPU 1407, following instructions from the application server, functions as the retrieval unit 1813.

The retrieval unit 1813 in Fig. 18 retrieves from the category master file 1405C the category items belonging to some or all of the levels concerning the responsible party transferring response to the inquiry. The retrieval unit 1813 retrieves the category items corresponding to the input terminology in the three levels of large category, medium category and small category.

The processing unit 1814 reads from the category master file 1405C the data of the category item retrieved and accomplishes the process of creating screen data to display on the responsible party's screen using the data that was read out, and other processes. A Web page is created for displaying the transferee selection screen 2701. When the operation of selecting a transfer, out of either response or transfer, is undertaken using the responsible party's terminal, in the display blank 2704 of the transferee selection screen 2701 the retrieved results are automatically populated without waiting for instructions from the user. For example, when the transfer indication button 2706 is pressed, the results automatically retrieved by the retrieval unit 1813 are displayed. In this case, the retrieval unit 1813 uses the detection results of the level detection unit 1815.

The level detection unit 1815 detects the level of the category item linked to the responsible party making the transfer. Except when the detected level belongs to the lowest level, the retrieval unit 1813 automatically retrieves the category items belonging to the level lower than the category item. For example, if the responsible party is linked to the medium category of "capacitors," the category items from small categories such as "aluminum electrolytic capacitors," "ceramic capacitors" and "film capacitors", which are in the level below the category item, are retrieved. The transferee selection screen 2701 shown in Fig. 27 is an example when the responsible party is linked to "capacitors." When the responsible party is linked to a category item belonging to the level of small categories, such automatic retrieval is not performed. The category items belonging to levels below the category item to which the responsible party is linked have properties in common with the category item to which the responsible party is linked, and hence, if a transfer is made following those category items, it is possible to reduce the danger that the transfer will be repeated. On the other hand, with category items belonging to the same level, there is no guarantee that these will have properties in common with the category item to which the responsible party is linked, so there is considerable dependence on the knowledge and judgment of the responsible party selecting the transferee. For that reason, it is difficult to stably curb the danger that the transfer will be repeated.

When the appropriate category item has been selected from among the retrieved category items, the extraction unit 1816 extracts from the responsible party determination master file 1405B data on the responsible parties corresponding to the category item on the basis of the category item data. Through this, the transferee responsible party is determined.

In addition, in this embodiment the transfer count determination unit 1817, which counts the number of times transfers have been performed for an inquiry, is also used. The results of this counting are used by the extraction unit 1816. When operations to effect a transfer are performed on the terminal of a responsible party for an inquiry for which the number of transfers is at least as great as a threshold value, the extraction unit 1816 extracts from the responsible party determination master file 1405B data on the responsible parties linked to the category items belonging to the topmost level.

When transfers are being repeated, there is a high likelihood that the responsible party transferred to will be unable to determine a suitable responsible party either, and the repetition may be further continued among a portion of responsible parties. In such cases, it is possible to reduce the danger that transfer repetition will be continue beyond that by automatically extracting data on the responsible party linked to the category item belonging to the topmost level. Here, the category item belonging to the topmost level is "general," and the responsible party linked to the category item is "general Web master." By transferring to the "general Web master," it is possible avoid the continuation of transfers among a portion of responsible parties.

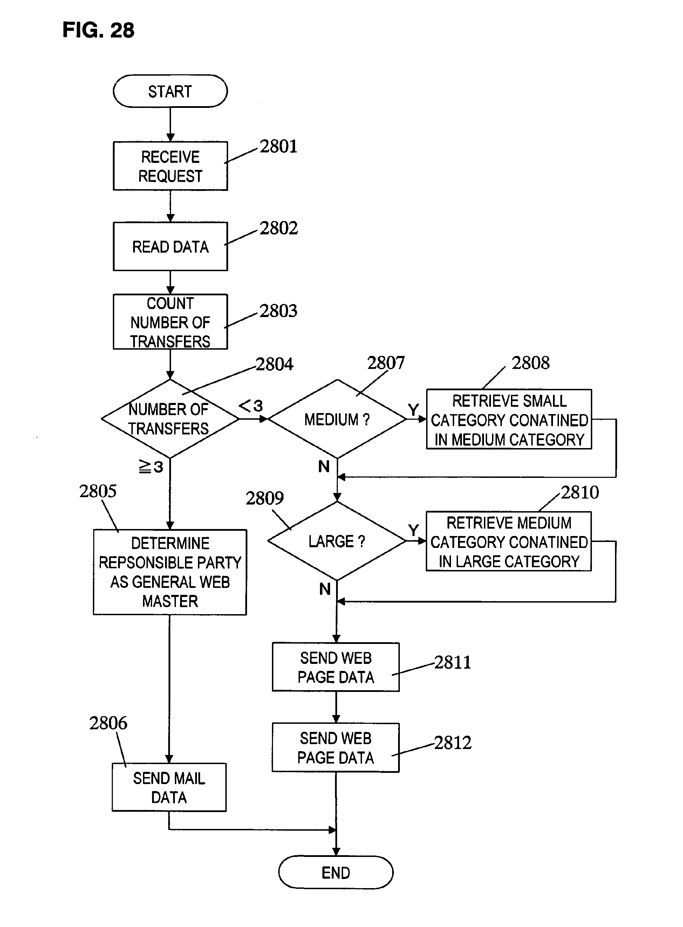

In the present embodiment, when process requests are received from the Web server apparatus 1204 in order to realize the functions of this retrieval unit 1813, processing unit 1814, level detection unit 1815, extraction unit 1816 and transfer count determination unit 1817, the CPU 1407 of the apparatus 1205 executes the procedures shown in Fig. 28, for example, following instructions from the application server.

When the process request is received (step 2801), the CPU 1407 reads from the response data file 1406B the responsible party code corresponding to the management No. of the request (step 2802). Furthermore, from the record registered in the response data file 1406B the CPU counts the number of transfers that have been performed for the inquiry corresponding to the management No. (step 2803).

The "status," "transferee" and "SEQ" data are also linked to the management No., as in the example in Fig. 22B. The "status" data indicates whether a "response" to the inquiry that management No. specifies was performed, if the responsible party performed a "transfer" or if it is "unanswered." The "transferee" data shows the code of the responsible party to which it was transferred. For the responsible party determined by the responsible party determination unit 5, it is possible to describe this as "automatic," for example. The "SEQ" data is a number indicating the sequence in which the record was registered for one management No. and one inquiry. A record for a single management No. is added when a "transfer" or "response" is performed. In the example in Fig. 22B, two records are registered for management No. "00010123." The record of SEQ "1" was registered in accordance with "response." In the record of SEQ "2" the value of the transferee data is "12345678." This value is the same as the responsible party code data in the record of SEQ "1". When multiple records have been registered for a single management No., it is possible to count the number of transfers by counting the number of those records in which the condition data shows a value of "transfer."

In this way, in place of counting the number of transfers the data on number of transfers may be stored in the inquiry data file 1406A, linked to the management No., and the value of the data may be updated each time there is a transfer, as shown for example in Fig. 22A. In this case, the transfer count determination unit 1817 can determine the number of transfers by referring to the value of the data.

When the number of transfers is obtained, the CPU 1407 determines whether or not the number is at least as great as a threshold value (step 2804). For example, when transfers have been repeated three or more times, the CPU 1407 determines that the number counted is at least as great as the threshold value. In this case, the CPU 1407 determines the responsible party to be the general Web master (step 2805). Furthermore, the CPU reads from the responsible party master file 1405A the email address data corresponding to the responsible party code corresponding to the general Web master. In addition, as a response to the process request, the CPU 1407 sends to the Web server apparatus 1204 data providing notification that the general Web master has been determined to be the responsible party. When the Web server apparatus 1204 receives this data, the CPU 1303 of the apparatus 1204 reads the Web page data informing the transferring responsible party that the general Web master has been selected as the transferee responsible party. This Web page data is sent from the requesting terminal 1208A. The transferee responsible party confirms the contents of this Web page on the display 1706, so that they can be informed that the general Web master has been selected as the transferee responsible party.

In addition, when the CPU 1407 of the apparatus 1205 acquires the email address data of the general Web master, the CPU reads mail data stored in advance in the HDD 1402, for example, and sets the email address of the general Web master as the addressee of the mail. Furthermore, the CPU sends the mail data to the mail server apparatus 1206 (step 2806). When the mail data is received from the database server apparatus 1205, the CPU 1504 of the apparatus 1206 distributes the mail, following instructions from the mail server 1807. Through this mail, the general Web master can be notified of the transfer.

If the number of transfers counted is smaller than the threshold value, the CPU 1407 of the apparatus 1205 extracts from the responsible party determination master file 1405B the category code and category level corresponding to the extracted responsible party code. Furthermore, the CPU determines whether or not the extracted category level is the "medium category" (step 2807). When the extracted category level is "medium category," even if there are no explicit instructions from the user, the CPU 1407 automatically retrieves from the category master file 1405C a record whose higher category code matches the extracted category code (step 2808). In addition, if the extracted category level is not "medium category," the CPU 1407 determines whether or not the category level is "large category" (step 2809). When the category level is the large category, a record whose higher category code matches the extracted category code is automatically retrieved from the master file 1405C (step 2810). For example, when the extracted category code and category level are respectively "A" and "large category," in the example in Fig. 20A a record such as "capacitor" is extracted. In addition, when the extracted category code and category level are respectively "AA" and "medium category," a record such as "aluminum electrolytic capacitor" is extracted. The category code of the category item is "0001," and the category level to which the category item belongs is "small category."

When automatic retrieval is conducted in this fashion, the CPU 1407 reads the retrieved category item data from the category master file 1405C and executes a process that creates the screen data displayed on the responsible party's terminal using the read-out data. The name and category level data of the retrieved category item are read from the master file 1405C and a Web page is created to display the transferee selection screen 2701 using the read-out data (step 2811).

In the data displaying the transferee selection screen 2701 in Fig. 27, in the section 2704 the category item name and category level are stated in accordance with the retrieved data. Because other data does not change, if the necessary data is stored in advance in the HDD 1401 or 1402 of the database server apparatus 1205, the data necessary for the Web page can be secured. For the operation of pressing the transfer indication button 2706, the management No. corresponding to the inquiry is stated in the value of the request sent through this. In addition, in the transferee selection screen 2701, selection buttons 2705 are also provided in corresponding to the category items. For each selection button 2705, the category code of the corresponding category item or a symbol string indicating the category code is stated. When the transfer indication button 2706 is pressed, the category code of the category item selected using the button 2705 is also included in the request data that is sent.

The CPU 1407 sends the Web page data created in this fashion to the Web server apparatus 1204 using the network interface 1409 (step 2812). When the Web page data is received from the database server apparatus 1205, the CPU 1303 of the apparatus 1204 sends the Web page data to the terminal 1208A requesting the transfer, following instructions from the Web server 1804. Through this, the transferring responsible party can confirm the transferee selection screen 2701 on the display 1706 of the terminal 1208A.

The transferring responsible party can select the category item to which the transferee responsible party is linked from the candidates displayed in the display section 2704 of the transferee selection screen 2701. By executing an operation that selects one of the selection buttons 2705 arranged in correspondence to the various candidates, the corresponding category item is selected. When the transfer indication button 2706 is pressed with a category item selected, the CPU 1707 of the terminal 1208A sends to the Web server apparatus 1204 a request including the data and management No. specifying the selected category item. When the Web server apparatus 1204 receives the request, a process request containing the data and management No. specifying the selected category item is sent to the database server apparatus 1205.

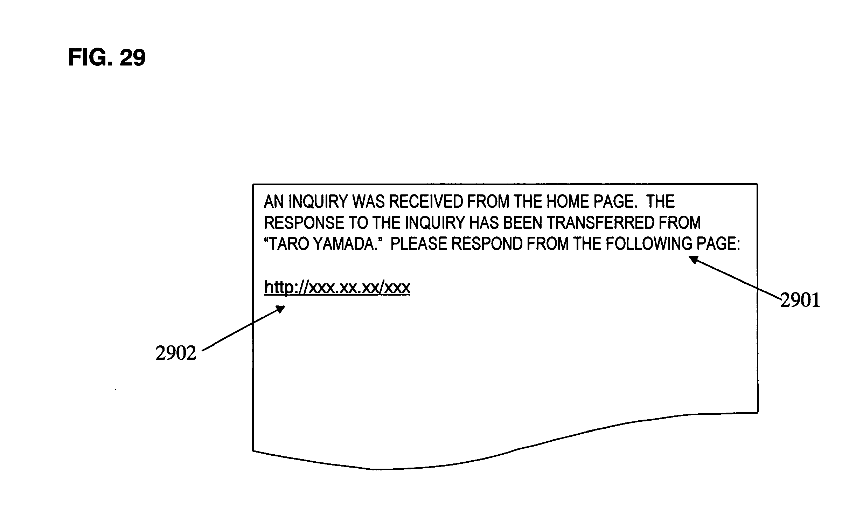

When the process request is received from the database server apparatus 1205, the CPU 1407 of the apparatus 1205 extracts the responsible party code corresponding to the data that specifies the category item containing the request from the responsible party determination master file 1405B as the transferee responsible party data. The CPU 1407 creates mail data with the email address of the responsible party set as the addressee. In this mail, the fact that the inquiry response is being transferred is communicated to the transferee responsible party. The text data used for the communication may be stored in advance on the HDD 1402 and the CPU 1407 may acquire such from the HDD 1402 as necessary. Fig. 29 shows one example of mail communicating the transfer.

In this example, the main message 2901 and a link 2902 are provided, similar to the mail shown in Fig. 25. Text data corresponding to the message 2901, such as "An inquiry was received from the home page. A response to the inquiry has been transferred from Taro Yamada.' Please respond from the following page" may be stored in advance on the HDD 1402. The link 2902 to the Web page for confirming the contents of the inquiry may be specified by a program stored on the HDD 1301 of the Web server apparatus 1204, for example, and contains the symbol string corresponding to the management No. as the argument of the program. If the terminal the transferee responsible party is using is the terminal 1208B, the responsible party can confirm the contents of this mail using the mailer 1818, which runs on the terminal 1208B. When the responsible party operates this link 2902, the responsible party can browse an inquiry confirmation screen as shown in Fig. 26A on the display 1706 of the terminal 1208A.

Thus, by exhibiting results that were automatically retrieved, the responsible party can refer to those retrieval results with priority, and the likelihood of determining a responsible party to transfer the response to the inquiry to can be increased with reference to the category item belonging to the lower level of category items specified by the inquiry. Moreover, the necessity of the responsible party intentionally ordering retrieval diminishes, making it possible to raise the efficiency of transfer work.

In addition, the transferring responsible party can also retrieve not just the automatically retrieved category items but also category items not displayed in the display section 2704 at that time. In that case, the input blank 2702 and retrieval button 2703 provided on the transferee selection screen 2701 are used.

The responsible party inputs the product name or terminology relating to such in the input blank 2702 using the keyboard 1704 and mouse 1705 of the terminal 1208A and then presses the retrieval button 2703. When this operation is done, the CPU 1707 of the terminal 1208A, following instructions from the Web browser 1811, sends to the Web server apparatus 1204 a request including the management No. corresponding to the inquiry and a symbol corresponding to the input terminology, using the network interface 1709.

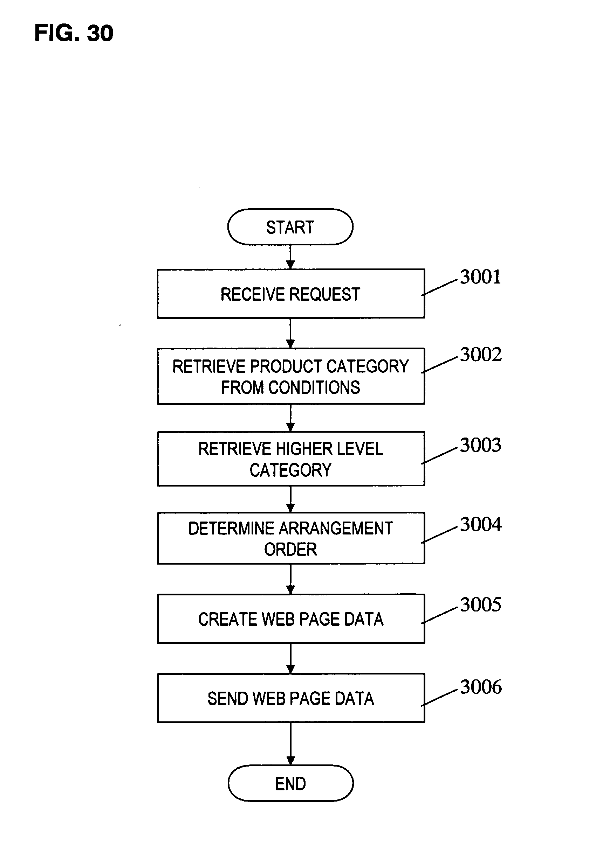

When the request from the terminal 1208A is received, the CPU 1303 of the apparatus 1204 sends to the database apparatus 1205 a process request containing the management No. and the symbol string data corresponding to the input terminology. When the process request from the apparatus 1204 is received, the CPU 1407 of the apparatus 1205 executes procedures such as those shown in Fig. 30 in accordance with instructions from the application server.

When a process request from the apparatus 1204 is received (step 3001), the CPU 1407 of the apparatus 1205 retrieves product categories, with the terminology contained in the process request as the key (step 3002). Here, as produce categories the category items belonging to the "small category" category level are targets of retrieval. In this case, the CPU 1407 reads from the category master file 1405C the name data for category items belonging to the "small category" category level, and compares this to the terminology data extracted from the process request. For example, category items having names that perfectly match the terminology from the process request and names that partially contain the terminology are retrieved from that comparison. If the terminology "aluminum electrolytic" is input into the input blank 2702, category items with names such as "aluminum electrolytic capacitors," which partially contains the terminology, are retrieved.

When product categories are retrieved in this manner, the CPU 1407 retrieves category items belonging to levels above the retrieved product category (step 3003). In this embodiment, because retrieval was accomplished for category items belonging to the "small category" category level," category items belonging to the "medium category" and "large category" category levels are retrieved. In order to accomplish this retrieval, the CPU 1407 reads the higher category code data from the records for the category items retrieved for the product category. Furthermore, category items having a category code that matches the higher category code are retrieved from the category master file 1405C as category codes belonging to the "medium category" category level. Furthermore, the higher category code data is read from the records of category items belonging to the "medium category" category level. In addition, category items having a category code that matches the higher category code are retrieved from the category master file 1405C as category items belonging to the "large category" category level. If the category item retrieved for the product category is "aluminum electrolytic capacitors," the higher category code contained in the record of the category item is "AA," and the category item having the category code that matches the higher category code is "capacitors." This "capacitors" is retrieved as the category item belonging to the "medium category" category level. In addition, the higher category code contain in the record of "capacitors" is "A" and the category item having a category code that matches the higher category code is "circuit parts." At this time, "circuit parts" is retrieved as the category item belonging to the "large category" category code.

When category items are retrieved in multiple levels in this manner, the CPU 1407 determines the arrangement order of the retrieved category items on the basis of the levels to which those category items belong (step 3004). Out of the levels that were retrieval subjects, the category items are arranged in order from those in the lowest level. If category items belonging to the "small category," "medium category" and "large category" category levels are retrieved, they are arranged in the order of the category item belonging to the "small category," the category item belonging to the "medium category" and the category item belonging to the "large category." In the above-described example, by arranging these in the order "aluminum electrolytic capacitors," "capacitors," and "circuit parts," the "small category" is recommended.

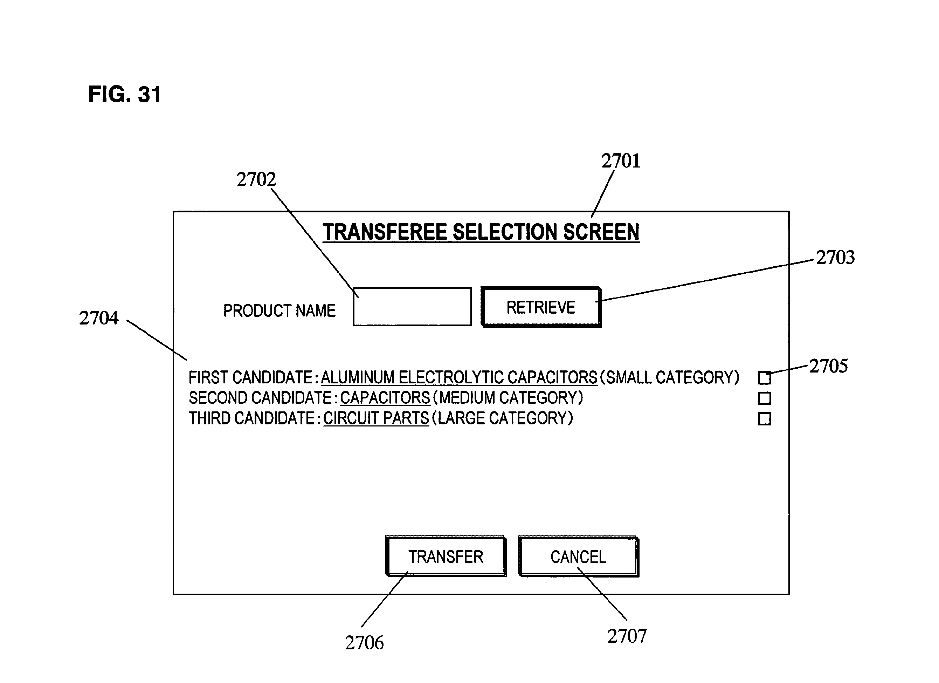

When the arrangement order is determined, the CPU 1407 creates Web page data to display the retrieval results on the terminal, in accordance with the arrangement order (step 3005). The results of retrieval corresponding to the input terminology are also displayed using the transferee selection screen 2701. Fig. 31 is one example of the transferee selection screen when retrieval has been accomplished in response to terminology. In the transferee selection screen 2701 shown in Fig. 31, the retrieved "aluminum electrolytic capacitors," "capacitors" and "circuit parts" are arranged in that order from the top of the display section 2704.

When the CPU 1407 creates the data in this manner, the starting point of the arrangement of category items is the very top of the display section 2704. The direction in which the responsible party refers to the retrieved category items is typically from the top to the bottom of the display section 2704. For this reason, by placing those belonging to the lower levels toward the top, category items in the lower levels are confirmed with priority. In this case, the arrangement order of retrieved category items is the priority order when providing retrieval results to the transferring responsible party.

When the Web page data is created, the CPU 1407 sends this to the Web server apparatus 1204 using the network interface 1409 (step 3006). When the Web page data is received from the database server apparatus 1205, the CPU 1303 of the apparatus 1204 sends the Web page data to the transfer requesting terminal 1208A in accordance with instructions from the Web server 1804. Through this, the transferring responsible party can confirm the transferee selection screen 2701 on the display 1706 of the terminal 1208A.

When the system accomplishes retrieval using the input terminology in this manner, it is unnecessary for the responsible party to search related category items from among many category items. Furthermore, because the arrangement order for category items retrieved from multiple levels is based on the levels to which those category items belong and the screen data is created in accordance with the determined arrangement order, the level relationship of the retrieved category items can easily be understood by the responsible party from the screen data. For this reason, the responsible party can easily select the category items for reference to restrict the responsible parties to which the inquiry response is being transferred.

In the above example, the category items are arranged starting from the lower levels, but this is intended to be illustrative and not limiting, as the arrangement order may be altered.

Altering the arrangement order can be done in accordance with the urgency of the transfer or success rate. In this case, the urgency level determination unit 1819 and success rate determination unit 1820 are used. The urgency level determination unit 1819 determines the urgency level of the transfer based on the position in the hierarchical structure of the category items related to the transferring responsible party and the position in the hierarchical structure of the retrieved category items. When the urgency level determination unit is used, the processing unit 1814 alters the determined arrangement order on the basis of the urgency level.

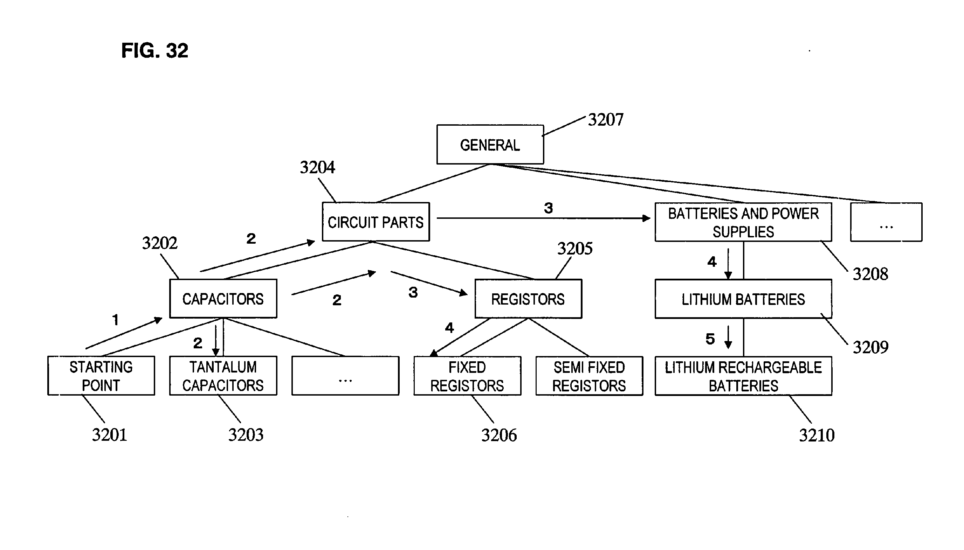

The urgency level of the transfer can be given by the distance in the hierarchical structure between the category item linked to the transferring responsible party and the retrieved category item. If the distance is large, there is a high probability that the responsible party does not understand the retrieved category item. The distance between category items can be indicated by the number of items to the retrieved item in the tree structure. Fig. 32 illustrates the distance between category items in the hierarchical structure.

In this example, the distance from the category item 3201 that is the starting point to other category items is indicated by arrows. "Capacitors" 3202, which belongs to the level one up from the category item 3201, is the first item in the hierarchical structure counting from the category item 3201, so the distance between the category item 3201 and "capacitors" is 1. In addition, "tantalum capacitors" 3203, which belongs to the same level as the category item 3201, is the second item counting from the category item 3201, so the distance between the category item 3201 and "tantalum capacitors" 3203 is 2. In addition, "circuit parts" 3204, which belongs to the level two up from the category item 3201, is the second item counting from the category item 3201, so the distance between the category item 3201 and "circuit parts" 3204 is 2 as well. "Resistors" 3205, which belongs to the level immediately below "circuit parts" 3204, and "fixed resistors" 3206, which belongs to the next level down from that, are the third and fourth items counting from the category item 3201 and hence the distances to these items 3205 and 3206 are respectively 3 and 4.

In this hierarchical structure, the level one up from 3204 is "general." "General," which is the root item, is excluded as an exception from category items for purposes of finding the urgency level. For that reason, "batteries and power supplies" 3208, which belongs to the same level as "circuit parts" 3204, is the third item counting from the category item, and so the distance between the category item 3201 and "batteries and power supplies" 3208 is 3. "Lithium batteries," 3209, which belongs to the level immediately below "batteries and power supplies" 3208, and "lithium rechargeable batteries" 3209, which belongs to the next level down from that, are the fourth and fifth items counting from the category item 3201, so the distances to the items 3209 and 3210 are 4 and 5, respectively.

Assuming the category item that is the starting point is "aluminum electrolytic capacitors," although the responsible party for the category item may have a good understanding of "tantalum capacitors" and "capacitors," there is a high probability that they do not understand "fixed resistors" or "lithium rechargeable batteries."

In order to determine the urgency level from the number of items in this manner, the CPU 1407 specifies, for example, the item belonging to the highest level out of the category items in the route connecting the category item linked to the responsible party and the retrieved category item. To make this specification, the CPU 1407 needs the category codes of both category items that are the ends of the route. The category code of the category item linked to the responsible party can be acquired using the management No. of the process request. The responsible party code corresponding to the management No. may be extracted from the response data file 1406B, and the category code linked to the extracted responsible party code may be extracted from the responsible party determination master file 1405B. The category code of the retrieved category item may be extracted from the retrieved record.

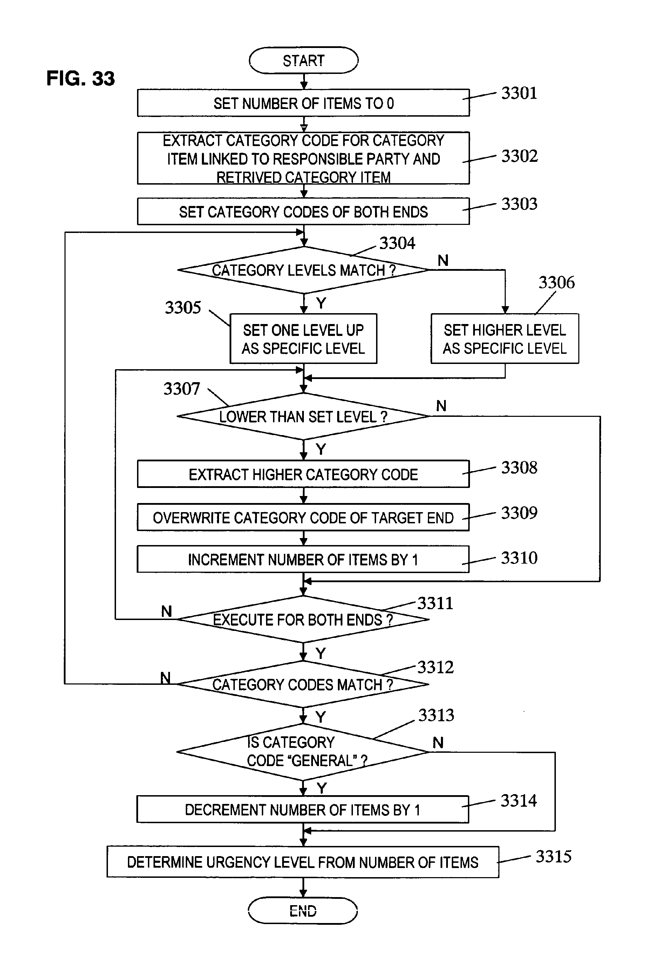

As in the procedure shown in Fig. 33, the CPU 1407, after making the initial settings such as setting the value of the number of items to 0 (step 3301), extracts the category codes of the category item linked to the responsible party and the retrieved category item (step 3302).

When the category codes of both category items have been acquired in this manner, the CPU 1407 sets the two category codes as the respective category codes of the two ends (step 3303). Furthermore, the CPU 1407 compares the category levels of the two ends using the category codes of the two ends (step 3304) and sets the level to which the specified category items belong on the basis of those comparison results. The category levels of the two ends can be acquired, for example, from the category master file 1405C.

If the category levels of the two ends match, the CPU 1407 sets the level one up from the category levels as the level to which the specified category item belongs (step 3305). In addition, if the category levels of the two ends differ, the higher level out of these category levels is set as the level to which the specified category item belongs (step 3306).

When the level to which the specified category item belongs has been set, the CPU 1407 executes steps 3307 through 3311 for each end. First, a determination is made as to whether or not the category level to which the target end belongs is a level lower than the set level (step 3307). When the category level to which the target end belongs is a level lower than the set level, the higher category code corresponding to the category code of that end is extracted from the master file 1405C (step 3308). Furthermore, records having category codes that match the extracted higher category code are retrieved from the master file 1405C and the category codes are extracted from those retrieved records. The CPU 1407 replaces the category code set for the end with the extracted category code (step 3309). Furthermore, the set value of the number of items is updated by adding one to the set value of the number of items (step 3310). When the set value of the number of items is updated or the category level to which the target end belongs is a level at least as high as the set level, the CPU 1407 determines whether or not the steps 3307 through 3310 have been executed for both ends (step 3311). If the steps 3307 through 3310 have not been executed for both ends, the steps 3307 through 3310 are executed for the remaining end.

If the steps 3307 through 3311 have been executed for both ends, the CPU 1407 determines whether or not the category codes for the two ends at that time match (step 3312). If the category codes of the two ends do not match, the procedure is repeated from step 3304. In contrast, if the category codes of the two ends match, the CPU 1407 determines whether or not the category codes of the ends match the category code of "general" (step 3313). If the category codes of the ends match the category code of "general," the setting value of the number of items is updated by subtracting one from the setting value of the number of items (step 3314). If the setting value of the number of items is updated or the category codes of the ends do not match the category code of "general," the CPU 1407 determines the setting of the number of items at that time as the urgency level (step 3315).

In this manner, the urgency level can be determined from the data in the category master file 1405. The urgency can be also determined for example by using a table that records urgency level data for combinations of category items. In this case, the urgency level data corresponding to the combination of the category item linked to the responsible party and the retrieved category item may be extracted from the table.

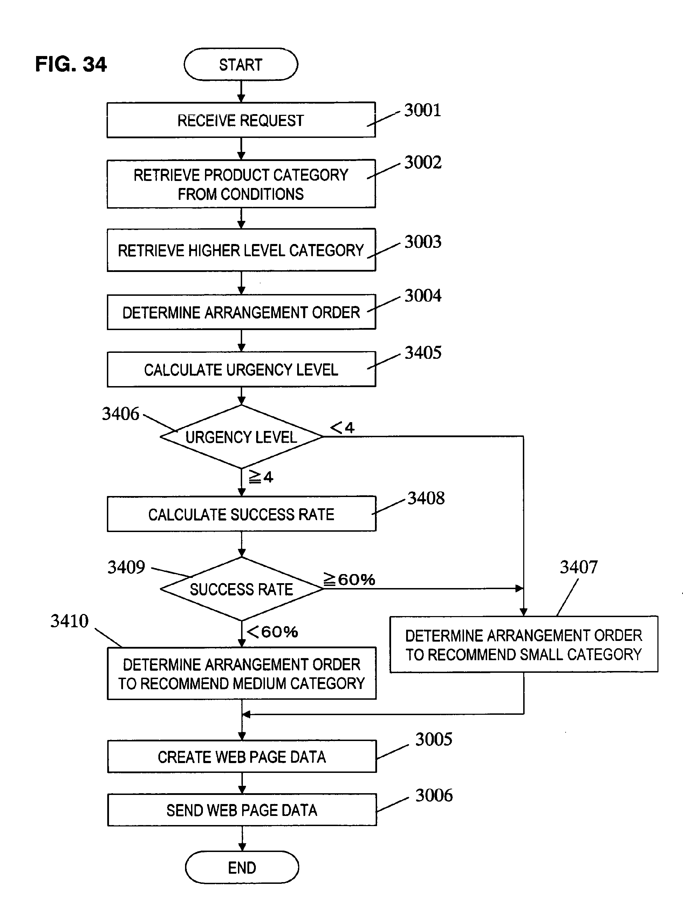

In addition, the urgency level need not be determined for all retrieved category items. In this embodiment, the urgency level is determined only for the category item retrieved in step 3002 of Fig. 30. Fig. 34 shows one example of the procedure the CPU executes when using the urgency level.

As shown in Fig. 34, steps 3001 through 3006 are the same as steps 3001 through 3006 in Fig. 30. In the example in Fig. 34, the CPU 1407 executes steps 3405 through 3410 after step 3004.

When the CPU 1057 determines an arrangement order in which the "small category" is recommended (step 3004), the urgency level is determined as stated above (step 3405). When the urgency level is determined, the CPU 1407 determines whether or not the urgency level is at least as great as a threshold value (step 3406). Here, the threshold value is 4. The threshold value can be determined on the basis of the number of levels on the hierarchical structure. When there are three category levels--"small category," "medium category" and "large category"--excluding the root, as in this example, if the category level to which the retrieved category item belongs is the "small category," if the urgency is 4 or greater the possibility that the responsible party does not understand the retrieved category item increase quite a bit. In that case, the category item in the rank above the category item linked to the responsible party and the category item above the retrieved category item do not match at the "medium category" or "large category" levels. If the category items differ at the "large category" level, there are very few common points between the category items, so changes for the responsible party to come into contact with the product corresponding to the category item are in general quite small.

By comparing the urgency level to the threshold value in this manner, it is possible to estimate whether or not the responsible party can adequately understand the retrieved category items. When the urgency level is smaller than the threshold value, the CPU 1407 leaves the arranged order unchanged in an order that recommends the "small category" (step 3407).

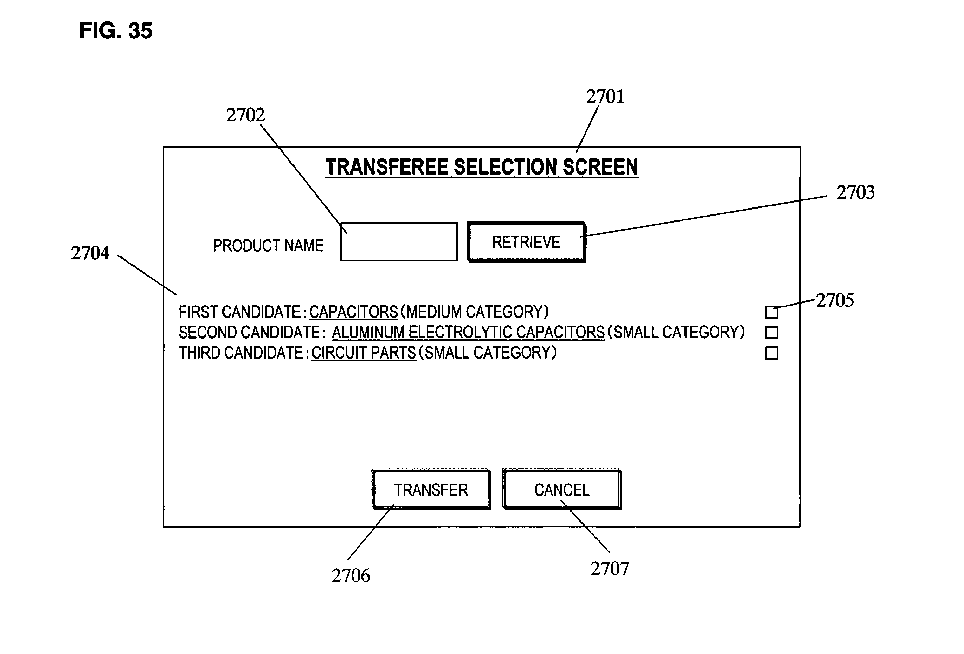

When the urgency level is at least as great as the threshold value, the CPU 1407 alters the arranged order determined in step 3004, and for example an arranged order that recommends the "medium category" is determined. When an arrangement order is determined that recommends the "medium category," the display on the transferee selection screen 2701 differs from the example shown in Fig. 31 in accordance with that determination. Fig. 35 shows one example of the transferee selection screen 2701 when the arrangement sequence is determined to be a sequence that recommends the "medium category."

When the urgency level is high, the category item belonging to the "medium category" is placed above the category item belonging to the "small category" in the display section 2704, as in this example, and the "medium category" is recommended.

The category item belonging to the "medium category" is easier to distinguish than the category item belonging to the more detailed "small category." For that reason, it is possible reduce the possibility of making an erroneous selection than when selecting the transferee party from the category items belonging to this "small category."

In determining the arrangement order when the urgency level is at least as great as the threshold value, it is possible to use the success rate determination unit 1820. The flowchart in Fig. 34 is an example using this success rate.

The success rate determination unit 1820 determines the success rate of transfers the responsible party executing the transfer operation has had in the past. When the success rate determination unit 1820 is employed, the processing unit 1814 changes the determined arrangement order when the success rate is smaller than a threshold value. In order to realize functions in this case, the CPU 1407 uses data from the response data file 1406B. As in the example in Fig. 22B, the response data contains the "transferor" data and the "status" data. If the "status" data shows "response," this means that the transferee responsible party was appropriate, and that transfer can be interrupted as a success. In contrast, if the "status" data shows "transfer" even though the "transferor" data is not "'automatic," this means that the transferee responsible party performed another transfer, so that transfer can be interpreted as being a failure.

The CPU 1407 retrieves from the response data file 1406B records in which the responsible party code corresponding to the management No. for the process request matches the "transferee" data. Furthermore, out of these retrieved records, the number of records showing "status" data of "response" is extracted, along with the total number of retrieved records. In addition, the success rate is calculated from the number of "responses" and the total number. For example, from this kind of calculation, the CPU 1407 determines the success rate (step 3408).

When the success rate has been determined, the CPU 1407 determines whether or not the success rate is smaller than a threshold value (step 3409). Here, the threshold value is 60%. When the determined success rate is smaller than the threshold value, the CPU 1407 alters the arrangement order determined in step 3004 and determines an arrangement order that recommends the "medium category" (step 3410). When the determined success rate is at least as great as this threshold value, the CPU 1407 does not alter the arrangement order, leaving it in an order that recommends the "small category" (step 3407). Even in cases where the transferee responsible party is inappropriately selected in generation when the "small category" is recommended, if the success rate is high, there is little worry that this will be an unsuitable selection. If this is a "small category" responsible party, there is a high probability that more appropriate answers are being given for products belonging to the category item, so by using the success rate, it is possible to keep the number of transfers until a transfer to the responsible party low.

When the arrangement order is determined using the urgency level and success rate in this manner, the CPU 1407 executes steps 3005 and 3006, as has already been explained, and Web page data for displaying the transferee selection screen is sent to the Web server apparatus 1204. Through this, the transferring responsible party can confirm the transferee selection screen 2701 as shown in Fig. 31 or Fig. 35 on the display 1706 of the terminal 1208A.

With the above-described embodiment, by following the instructions of the application server program, the single computer being used as the database server apparatus 1205 functions as the inquiry response apparatus 1801. Instead of realizing the inquiry response system in this way, multiple computers may realize the functions of the inquiry response apparatus 1801. For example, by operating programs corresponding to the application server on the Web server apparatus 1204, the computer used as the Web server apparatus 1204 realizes the functions of the inquiry response apparatus 1801, with the exception of the master files 1405A through 1405D and the data file 1406A. If the Web server apparatus 1204 does not realize those functions to the point, files 1307 for installing those programs on the computer are stored in advance on the HDD 1301 of the apparatus 1204, for example, as shown in Fig. 13. These files 1307 store a program necessary for installation containing the compressed program itself and library that the program uses. When the CPU 1303 of the apparatus 1204 reads the file 1307 and executes the program on the RAM 1304, an executable file for a program corresponding to the application server is installed in a specified region of the HDD 1301. The CPU 1303 reads the executable file from the HDD 1301 in accordance with settings and runs the program corresponding to the application server on the RAM 1304. Through this, the computer being used as the Web server apparatus 1204 executes the procedures for determining the responsible party, retrieving category items, generating data on the transferee selection screen, and extracting data on the transferee responsible party, in place of the database server apparatus 1205. The data in the master files 1405A through 1405D and the data fields 1406A and 1406B can be accessed via the network 1207.

In such a case, the functions of the inquiry response apparatus are realized with the two computers used as the Web server apparatus 1204 and the database server apparatus 1205. Furthermore, a portion of the master files 1405A through 1405D and the data files 1406A and 1406B may be prepared on separate computers.

In addition, the program corresponding to the application server may be run on a computer separate from the Web server apparatus. As that computer, it is possible to use a computer newly connected to the network 1207. In installing programs on that computer, the above-described file 1307 stored on the Web server apparatus 1204 may be used. When a request from the computer on which it is being installed is received, the CPU 1303 of the Web server apparatus 1204 acquires from the file 1307 the installation program containing the program corresponding to the application server program, and expresses through electrical signals instructions to the computer containing the program. Furthermore, the signal is compiled into a carrier wave using the network interface 1306 and is sent to the computer on which installation is to occur via the network 1207.

When the computer on which installation is to occur receives the signal, the install program is restored from the signal, and the file stored in the restored program is stored in a suitable region on the HDD. Using the file, the program corresponding to the application server is installed on the computer, the same as in the case of the Web server apparatus 1204.

Not only are programs provided via electrical communication circuits such as the network 1207 in this manner, by storing the programs on a computer readable recording medium, it is possible to provide them to related parties and third parties. When the program instructions are expressed with electrical signals, optical signals, magnetic signals or the like and those signals are sent on a carrier wave, it is possible to provide those programs via transmission media such as coaxial cable, copper wiring, optical fibers or the like. In addition, it is possible to use optical media such as CD-ROM, CD-R, CD-RW, DVD-ROM, DVD-RAM, DVD-R, DVD-RW and the like, or magnetic media such as flexible disks or semiconductor memory such as flash memory or RAM. Programs are provided by storing programs on computer-readable media containing computer-readable recording media or transmission media such as this. The programs in the first embodiment are similar.

In the second embodiment, the target of inquiry is not limited to a product but may also be a service. In addition, when both products and services are handled, the products and services may be separately categorized or may be combined and categorized.

As discussed above, the inquiry response system of the second embodiment comprises a first table configured to store data categorizing into levels multiple products or services, and a second table configured to store data linking category items and responsible parties. The responsible party determination unit determines the responsible party to which the inquiry is reported on the basis of the inquiry data. The inquiry data can contain category items corresponding to the products or services being inquired about. The retrieval unit retrieves from the first table category items belonging to a portion or all of the levels for responsible parties to which response to the inquiry will be transferred. The processing unit reads the retrieved category item data from the first table and creates and processes screen data for display on the responsible party's terminal using the read-out data. The responsible party can decide on category items suitable for transfers with reference to the screen data displayed on the terminal. The extraction unit extracts responsible party data from the second table on the basis of the category item data. When the responsible party has selected a category item, the corresponding responsible party data is extracted as transferee responsible party data on the basis of the category item data.

In this inquiry response system, the computer can specify category items suitable for transfer using the category item data that is categorized hierarchically. The transferee responsible party is selected in accordance with the specified category item, so the possibility of a transfer to an unsuitable responsible party is decreased and it is possible for a suitable responsible party to respond swiftly to the inquiry.

This inquiry system may further comprise a level detection unit configured to detect the level of the category item linked to the transferring responsible party. Excluding times when the detected level belongs to the lowest level, the retrieval unit retrieves category items belonging to the level below the category item. In this case, a screen is displayed on the responsible party's terminal that is generated using data on category items belonging to the level below the category item linked to the responsible party. Because category items categorized hierarchically share some attributes with the category item belonging to the level above, the computer can efficiently specify category items having common attributes. For this reason, through this display the necessity of the transferring responsible party alone deciding on a category item having common attributes is diminished and the danger of repeat transfers occurring is curbed.

The retrieval unit retrieves category items belonging to the level below the category item stipulated by the inquiry when, for example, the operation of selecting a transfer out of response or transfer is undertaken on the responsible party's terminal. Because retrieval is accomplished when the operation of selecting a transfer is undertaken on the responsible party's terminal, prior to the responsible party undertaking the operation that directs retrieval, it is possible to provide the responsible party with category items belonging to the level below the category item stipulated in the inquiry. By providing this prior to the retrieval instruction by the responsible party, the responsible party references those retrieval results preferentially. Accordingly, it is possible to increase the probability of determining a responsible party to which a response to the inquiry will be switched, with reference to the category items belonging to the level below the category item stipulated in the inquiry. Moreover, the necessity of the responsible party intentionally giving retrieval instructions diminishes, so that the efficiency of transfer operations can be improved.

A transfer number determination unit configured to determine the number of times transfers have been made for an inquiry may also be provided in the inquiry response system. In this case, when the operation to transfer is done on the responsible party's terminal for an inquiry whose number of transfers is at least as great as a threshold value, the extraction unit extracts from the second table data on responsible parties linked to the category item belonging to the topmost level. When the number of transfers is at least as high as a prescribed number, there is a high probability that there is not a suitable category item for the inquiry in the category items belonging to the level below a certain category item, so the danger increases that repeat transfers will continue. At such times, by automatically extracting data on the responsible party linked to the category item belonging to the topmost level, it is possible to reduce the danger that repeat transfers will continue beyond that.

In addition, in the inquiry response system, the retrieval unit may retrieve category items corresponding to the input terminology from multiple levels. In this case, the processing unit determines the arrangement order of the retrieved category items on the basis of the levels to which those category items belong, and generates screen data in accordance with the determined arrangement order. Terminology that will be the retrieval key is typically input by the responsible party making the transfer. By having the system conduct retrieval using the input terminology, the necessity of having the responsible party search related category items from among many category items diminishes. Furthermore, because the arrangement order of the retrieved category items is determined on the basis of the level to which those category items belong and screen data is generated in accordance with the determined arrangement order, the responsible party can easily understand the level relationship of the retrieved category items from the screen data. Accordingly, the responsible party can easily select category items for reference in restricting the responsible parties to which the response to the inquiry is transferred.

In the inquiry response system, an urgency level determination unit may be further provided that determines the urgency level of a transfer on the basis of the position in the hierarchical structure of the category item linked to the responsible party making the transfer and the position in the hierarchical structure of the retrieved category item. In this case, the processing unit alters the determined arranged order on the basis of the urgency level. The urgency level of a transfer can be determined, for example, by the distance between the position in the hierarchical structure of the category item linked to the responsible party making the transfer and the position in the hierarchical structure of the retrieved category item. In hierarchical categories, when the levels dividing two category items is high, the number of items from the category item linked to the transferring responsible party to the retrieved item increases when counted. This number of items can express the distance. In addition, the relationship between items separated by a high level is such that there is a high probability that the responsible party does not understand it. For this reason, it is possible to reduce the danger of repeating transfers by altering the arrangement order on the basis of the urgency level of the transfer.

In addition, a success rate determination unit configured to determine the success rate of transfers the responsible party that initiated the transfer operation has initiated in the past may be further provided in the inquiry response system. When the success rate is smaller than a threshold value, the processing unit makes alterations to the determined arrangement order. There are individual differences in whether or not the relationship among various items is understood. Even if there is a danger of repeating transfers on average, if the success rate of transfers initiative by the responsible party in the past is high, the determined arrangement order will be displayed in that form for the responsible party on the basis of the level to which the retrieved category item belongs.

### INDUSTRIAL APPLICABLITY

The data transfer system, data transfer system and data transfer program of the present invention are effective in that it is possible to select the appropriate transferee for processing those demands, even in cases when user demands are not concretely fixed, the data transfer system, and can be used in various systems that provide information and contents.

## Claims

1. A data transfer device, comprising:
a category information database configured to link and store category items for classifying hierarchically targets described with data, and transfer destinations;
a receiving unit configured to receive data;
a transfer destination determination unit configured to, upon the receiving unit receiving the data, determine the transfer destination of the received data;
an unprocessed notification receiving unit configured to receive an unprocessed notification from the transfer destination of the received data;
a category item retrieval unit configured to retrieve the category item from the category information database on the basis of the transfer destination of the received data in case of the unprocessed notification unit receiving the unprocessed notification;
a transfer destination retrieval unit configured to retrieve a new transfer destination of the received data from the category information database on the basis of the category item retrieved by the category item retrieval unit; and
a transfer unit configured to transfer the received data by the receiving unit to the new transfer destination retrieved by the transfer destination retrieval unit.

2. The data transfer device of claim 1, further comprising a hierarchy detection unit configured to detect a hierarchy of the category item linked to the transfer destination of the received data on the category information database in response to the unprocessed notification unit receiving the unprocessed notification.

3. The data transfer device of claim 1, wherein the category item retrieval unit retrieved the category item belonging to a level lower than the category item linked to the transfer destination of the received data on the category information database.

4. The data transfer device of claim 1, further comprising a notification reception counting unit configured to count the number of the unprocessed notifications received by the unprocessed notification receiving unit.

5. The data transfer device of claim 4, wherein the category item retrieval unit retrieves from the category information database the transfer destination linked to the category item belonging to the highest class, when the number of the unprocessed notifications received as counted by the notification reception counting unit is not less than a set number.

6. The data transfer device of claim 1, further comprising a priority order determining unit configured to determine a priority order of the category item retrieved by the category item retrieval unit.

7. The data transfer device of claim 6, further comprising a retrieval key acquisition unit configured to acquiring a term as a key for retrieving the category item.

8. The data transfer device of claim 7, wherein the category item retrieval unit retrieves unit retrieves on multiple levels a category item corresponding to a keyword acquired by the retrieval key acquisition unit, and
the priority order determining unit determines the priority order of the category item retrieved by the category item retrieval unit based on the level to which the category item belong.

9. The data transfer device of claim 8, further comprising an urgency level determination unit configured to determine an urgency level of the category item retrieved by the category item retrieval unit on the basis of a position in a hierarchy structure of the category item retrieved by the category item retrieval unit and a position in the hierarchy structure of the category item linked to the transfer destination of the received data on the category information database,
wherein the priority order determining unit determines the priority order of the category item retrieved by the category item retrieval unit on the basis of the urgency level determined by the urgency determination unit.

10. The data transfer device of claim 9, further comprising a transfer success rate calculation unit configured to calculate a success rate of transfers by the transfer unit on the basis of whether or not the unprocessed notification is received by the unprocessed notification unit,
wherein the priority order determination unit determines the priority order of the category item retrieved by the category item retrieval unit on the basis of the success rate calculated by the transfer success rate calculation unit.

11. The data transfer device of claim 6, wherein the transfer destination retrieval unit retrieves the new transfer destination of the received data on the basis of the priority order determined by the priority order determination unit.

12. The data transfer device of claim 6, further comprising: a category item display unit configured to display the category items retrieved by the category item retrieval unit; and
a selection result acquisition unit configured to acquire a selection result for the category items displayed by the category item display unit,
wherein the transfer destination retrieval unit retrieves the new transfer destination of the received data on the basis of the selection result acquired by the selection result acquisition unit.

13. The data transfer device of claim 12, wherein the category item display unit further display the level to which the category item retrieved by the category item retrieval unit belong.

14. The data transfer device of claim 1, wherein the category information database includes category codes of the category items, data representing the levels to which the category items belong, category codes of the category items belonging to the levels immediately above the category items, and identification codes of the transfer destinations.

15. The data transfer device of claim 1, further comprising: a process complete notification receiving unit configured to receive a process complete notification from the transfer destination of the received data; and
a history recording unit configured to record a history of transfers of the received data until a process complete notification is received by the process complete notification receiving unit.

16. The data transfer device of claim 15, further comprising a link determination unit configured to determine whether or not the category item is to be linked to another category item, excluding the category item belonging to the immediately above level, on the basis of the history recorded by the history recording unit; and
a link data registering unit configured to register link data in the category information database according to a determination result by the link determination unit.

17. The data transfer device of claim 16, further comprising a category item data totaling unit configured to total a transfer count until the process complete notification is received by the process complete notification receiving unit from the transfer destination linked to the category item on the category information database, for each category item,
wherein the link determination unit determines whether or not the category item is to be linked to the another category item on the basis of the total value of the transfer count obtained by the category item data totaling unit.

18. The data transfer device of claim 17, wherein the category item data totaling unit totals for each transfer destination the count of the received data transferred to the transfer destination prior to the process complete notification receiving unit receiving the process complete notification, and
the link determination unit determined the another category items to be linked to the category item on the basis of the total value for each transfer destination obtained by the category item data totaling unit in case of determining the linking is executed among the category items.

19. The data transfer device of claim 16, further comprising: a link erase determination unit configured to determine whether or not to erase the link data recorded in the category information database by the link data registering unit; and
a link erasing unit configured to erase the link data from the category information database according to a determination result by the link erase determination unit.

20. The data transfer device of claim 19, wherein the link erase determination unit determines whether or not to erase the link data from the category information database on the basis of a usage status of a link contained in the link data.

21. The data transfer device of claim 1, wherein the received data is inquiry data.

22. A data transfer method, comprising the steps of:
receiving data;
determining a transfer destination of the received data, in response to the data;
receiving an unprocessed notification from the transfer destination of the received data;
retrieving a category item on the basis of the transfer destination of the received data from a category information database, in response to the unprocessed notification, the category information database linking and storing the category items for classifying hierarchically targets described by the data, and transfer destinations;
retrieving a new transfer destination of the received data from the category information database on the basis of the retrieved category item; and
transferring the received data to the retrieved transfer destination.

23. A data transfer program for causing a computer to execute the steps of the data transfer method of claim 22.

24. A computer readable recording medium storing a data transfer program for causing a computer to execute the steps of the data transfer method of claim 22.
